(19) Europäisches Patentamt / European Patent Office / Office européen des brevets

(11) **EP 3 085 597 B1**

(12) **EUROPEAN PATENT SPECIFICATION**

(45) Date of publication and mention
of the grant of the patent:
**15.11.2017 Bulletin 2017/46**

(51) Int Cl.:
**B61D 17/04** *(2006.01)*     **B61D 25/00** *(2006.01)*
**G01B 11/00** *(2006.01)*

(21) Application number: **16166420.6**

(22) Date of filing: **21.04.2016**

(54) **METHOD OF MANUFACTURING RAILWAY VEHICLE**

VERFAHREN ZUR HERSTELLUNG EINES SCHIENENFAHRZEUGS

PROCÉDÉ DE FABRICATION D'UN VÉHICULE FERROVIAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2015 JP 2015089211**

(43) Date of publication of application:
**26.10.2016 Bulletin 2016/43**

(73) Proprietor: **Hitachi, Ltd.**
**Tokyo 100-8280 (JP)**

(72) Inventors:
• **TSUTSUMI, Daisuke**
 **Tokyo, 100-8280 (JP)**
• **KASAI, Hiroaki**
 **Tokyo, 100-8280 (JP)**
• **OKADA, Norihisa**
 **Tokyo, 100-8280 (JP)**
• **NOGUCHI, Toshimitsu**
 **Tokyo, 100-8280 (JP)**
• **KAWABE, Shinichi**
 **Tokyo, 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**WO-A2-03/027604     JP-A- 2008 008 651**

**Description**

BACKGROUND OF THE INVENTION

Field of the Invention

The present invention relates to a method of manufacturing a railway vehicle including a fitting installation instruction.

Description of the Related Art

Publication of Japanese Patent No. 5228145 (Patent Literature 1) discloses a background art of the present field of art. Patent Literature 1 discloses "a measurement method for profile dimension of railway vehicle, including respectively fixing at least four digital cameras for photographing parts in such an arrangement sandwiching a rail installed in a measurement location therebetween from at least four predetermined positions, photographing a part of the vehicle obliquely from a longitudinal direction using at least the four digital cameras when a railway vehicle as object of measurement is arranged at a predetermined position on the rail and every time the vehicle is moved for a predetermined distance on the rail, taking images of targets provided at a plurality of predetermined points of the part of the railway vehicle, performing image processing and operation processing based on an image data from at least two of the four digital cameras for photographing parts for each target so as to calculate three-dimensional coordinate values at the image taking position of each of the plurality of targets disposed to cover the whole railway vehicle, and based on a combination of the three-dimensional coordinate values of the plurality of targets at each image taking position and a movement distance of the railway vehicle, calculating a profile dimension of the railway vehicle" (refer to claim 1).

SUMMARY OF THE INVENTION

A railway vehicle is a large-scale structure having a width and height of approximately 3000 mm (3 m) and a length of approximately 20000 mm (20 m) composed of a "bogie" and a "car body" mounted on the bogie. In the car body of the railway vehicle, a portion bearing a strength of the vehicle body, excluding seats and other interior equipment, lighting and control equipment, is referred to as a "body structure". A manufacturing process of a car body of a railway vehicle is roughly classified into a canning step of welding metal materials such as aluminum and stainless steel to form the body structure, and an outfitting step of attaching various components such as interior parts and electrical components to the body structure.

Since the body structure of a railway vehicle is a large-scale welded structure, the structure is often subjected to welding deformation, and either mechanical or thermal rectification is performed as a post-weld processing. As for small levels of deformations that could not be rectified, it is inevitable to perform adjustment operations corresponding to the amount of deformation when attaching components in the fitting step.

The outfitting step includes a step of installing an interior floor board to a floor support disposed on an underframe as foundation of the body structure. In this process, a surface level of the floor is adjusted by inserting floor height adjustment members between the floor support and the floor board.

During floor board installation, the difference between floor support heights is measured with a metallic straightedge having a length of 2 to 3 m, and fabrication and pre-installation of the adjustment member and loading and pre-installation of the floor board are performed after determining the amount of adjustment of the adjustment member. However, when manufacturing the underframe having a large number of welded areas with the body bolster and the floor support, for example, a large mount of dispersion occurs in the height direction through weld distortion. Therefore, it is necessary to confirm whether there is a lift in the pre-installed state, and perform the operation of adjusting the adjustment member and installing the floor board repeatedly. This step has a considerable level of difficulty, since the floor surface must be aligned with the camber, and a camber reference must be acquired from an area other than the underframe, since the body structure adopts a hexahedron structure having six sides and torsion occurs when welding the six sides together, and since if there are areas, such as the lower surface of the door opening or the lower surface of the opening for the end gangway, where surface matching (matching of height) must be performed with the upper surface of the floor board, the floor board side must be adjusted to perform surface matching if there is no adjusting allowance on the target surface side.

Therefore, adjustment and installation operations must be repeatedly performed during floor board installation, and the installation time is elongated. Further, the lifting of the floor board that had not been cancelled is considered to be one of the causes of a floor squeaking phenomenon where a squeaking noise occurs when the passenger walks on the floor surface.

Another example of a fitting process is a process of attaching a front side window glass to the leading body structure. The leading body structure corresponding to the leading portion of the vehicle is a welded structure that is configured to have a complicated curved surface shape from the viewpoint of reduction of air resistance and collision safety. Further, the front side window glass adopts a large-scale curved surface of approximately 2 m by 2 m, and includes a molding error that cannot be ignored with respect to the adjustment amount.

Not only the body structure formed as a welded structure but also the front side window glass as one of the fittings of the body structure has an error with respect to the design value, so that gauging is required during the fitting step. However, since the process handles a large-scale glass product, there is a drawback that a large number of workers and operation steps are required, and that the time required for the adjustment operation cannot be easily estimated in advance.

Moreover, depending on the quality of the leading body structure and the front side window glass, sufficient adjustment cannot be realized only via the adjustment margin, and in the worst case, the leading body structure must be subjected to cutting and re-welding, so that the process may cause a serious process delay.

Another example of the fitting step is a step of attaching a driver's cab to the inner side of the leading body structure. The driver's cab is a welded structure formed of sheet metal, so that it is subjected to welding deformation, similar to the body structure.

The height of the driver's cab is adjusted by inserting an adjustment member to the lower side of the driver's cab, but since it is installed at a narrow portion in the interior of the leading body structure, the upper surface of the driver's cab, which is not an adjustment portion, may interfere with the leading body structure. Since the adjustment height must be determined within the narrow operation space while considering such interference, the process requires a large number of operation steps.

The art taught in Patent Literature 1 computes a profile dimension of the railway vehicle, but the measurement is performed only from the exterior, so that it cannot be adopted to adjust the adjusting materials for installing floor board or the driver's cab. Further, the art taught in Patent Literature 1 is a method for measuring the profile dimension only after the vehicle is completed, and it does not aim at using the measurement result to realize a smooth adjustment operation. The art taught in Patent Literature 1 cannot be applied to the adjustment operation based on the measurement result, since the location and timing for performing measurement differ.

The object of the present invention is to provide a method of manufacturing a railway vehicle capable of cutting down the manufacturing time.

Therefore, the present invention provides a method of manufacturing a railway vehicle including a fitting installation instruction, considering the characteristics of manufacturing vehicles. The present invention is based on a concept of performing three-dimensional measurement (measurement method acquiring a surface profile of a target object as a three-dimensional coordinate data) prior to installation of fitting, and utilizing the measurement data to execute the fitting installation, requiring gauging, in a short time.

The present invention provides a method of manufacturing a railway vehicle solving the above-mentioned problems, including a first step of computing an ideal installation position of fitting to be installed to a body structure, based on a vehicle design information related to the body structure and fitting of the vehicle, and a first measurement result information acquired by performing three-dimensional measurement of an adjustment portion on the body structure to which the fitting is installed, a second step of outputting an instruction information instructing selection of an adjustment member to be arranged at the adjustment portion and arrangement position, based on an adjustment amount of difference at the adjustment portion computed from the ideal installation position of the fitting computed in the first step and the first measurement result information, and an information on adjustment member used for adjusting the difference when installing the fitting, and a third step of installing the fitting based on the instruction information.

According to the present invention, a railway vehicle can be manufactured in a short time. Specifically, installation of the fitting can be performed in a short time.

The problems, configurations and effects other than those described above will become apparent from the following description of the preferred embodiments.

BRIEF DESCRIPTION OF THE DRAWINGS

FIG. 1 illustrates one example of a flowchart according to a method of outputting a fitting installation instruction.
FIG. 2 is a table illustrating classifications of input 10 of FIG. 1.
FIG. 3 is a table illustrating classifications related to whether measurement result information 102 is necessary or not, and the correspondence of embodiments according to the present invention._
FIG. 4 illustrates an example of configuration of a floor board installation instruction apparatus.
FIG. 5 illustrates an example of a flow regarding processes and input/output performed by the floor board installation instruction apparatus.

FIG. 6 illustrates an example of relationship of input/output information.

FIG. 7 illustrates an example of relationship of data tables included in the input/output information.

FIG. 8 illustrates a data example of a floor support table 311.

FIG. 9 illustrates a data example of an area table 312.

FIG. 10 illustrates a floor structure of the railway vehicle.

FIG. 11 illustrates an example of floor supports and floor support measurement points of a cabin area.

FIG. 12 illustrates a cross-sectional structure of the floor.

FIG. 13 illustrates an example of a start point and an end point of the floor support.

FIG. 14 illustrates a data example of an adjustment member classification table 313.

FIG. 15 illustrates a data example of a floor support measurement table 321.

FIG. 16 illustrates a flowchart explaining a process of a fitting adjustment amount calculation processing unit 104.

FIG. 17 is an example of an input screen of a fitting installation instruction apparatus.

FIG. 18 is a view illustrating a camber.

FIG. 19 illustrates a cross-sectional camber system of the floor structure.

FIG. 20 is an example of a cross-sectional view of the floor structure.

FIG. 21 illustrates a measurement reference coordinate in a cross-sectional view of the floor structure.

FIG. 22 illustrates a coordinate reflecting the measurement result in the cross-sectional view of the floor structure.

FIG. 23 illustrates an example of an expression defining a floor support and a floor board in the cross-sectional view of the floor structure.

FIG. 24 illustrates a computed adjustment member thickness in the cross-sectional view of the floor structure.

FIG. 25 illustrates another example of an expression defining the floor support and the floor board in the cross-sectional view of the floor structure.

FIG. 26 illustrates a start point and an end point of data of an adjustment member table 331.

FIG. 27 illustrates a start point and an end point of the adjustment member.

FIG. 28 illustrates an example of a flowchart illustrating a process of an adjustment member instruction generation processing unit 105.

FIG. 29 illustrates an example of an adjustment member fabrication instruction 201.

FIG. 30 illustrates an example of an adjustment member arrangement instruction 202.

FIG. 31 is a side view of a body structure according to a third embodiment.

FIG. 32 illustrates an example of relationship of input/output information according to the third embodiment.

FIG. 33 is a data example of a camber reference measurement table according to the third embodiment.

FIG. 34 illustrates an example of an input screen of a floor board installation instruction apparatus according to the third embodiment.

FIG. 35 is a view explaining a camber system correction based on a measurement result of a camber reference according to the third embodiment.

FIG. 36 illustrates an example of a relationship of input/output information according to a fourth embodiment.

FIG. 37 is a view explaining a camber system correction based on a measurement result of a surface matching reference according to the fourth embodiment.

FIG. 38 is a view illustrating a relationship between input/output information related to the fifth embodiment.

FIG. 39 is a view illustrating a structure of a leading body structure B303 and a front side window glass B302 of the railway vehicle.

FIG. 40 is a frame format viewing FIG.39 from above.

FIG. 41 is a view illustrating cross-section AA and cross-section BB of FIG. 40.

FIG. 42 is an enlarged view of cross-section AA.

FIG. 43 is an example of a flowchart regarding a front side window glass adjustment amount computation processing performed by a fitting adjustment amount computation processing unit 104 of a fitting installation instruction apparatus 111.

FIG. 44 illustrates an example of an the adjustment member arrangement instruction 202 in the front side window glass installation.

FIG. 45 is a view illustrating a relationship between input/output information related to embodiment 6.

FIG. 46 is a view illustrating a structure of an inner side of the leading body structure and a driver's cab of the railway vehicle.

FIG. 47 is a view illustrating cross-section C of FIG. 46.

FIG. 48 is an example of a flowchart related to a driver's cab adjustment amount computation processing performed by the fitting adjustment amount computation processing unit 104 of the fitting installation instruction apparatus 111.

FIG. 49 illustrates one example of an adjustment member arrangement instruction 202 for installing a driver's cab.

FIG. 50 is a data example of an adjustment member classification table 313 according to a seventh embodiment.

FIG. 51 illustrates an example of a flowchart illustrating an output process of an adjustment member fabrication instruction and an arrangement instruction by the adjustment member instruction generation processing unit 105 according to the seventh embodiment.

FIG. 52 is a view explaining a combination of adjustment member thicknesses according to the seventh embodiment.

DETAILED DESCRIPTION OF THE PREFERRED EMBODIMENTS

Now, first to seventh embodiments of a floor board installation instruction apparatus of a railway vehicle and a method for manufacturing a railway vehicle will be described as preferred embodiments of the present invention, with reference to the drawings.

<First Embodiment>

A first embodiment illustrates a fitting installation instruction method in a method of manufacturing a railway vehicle, based on a measurement result information as an inclusive concept of the present invention.

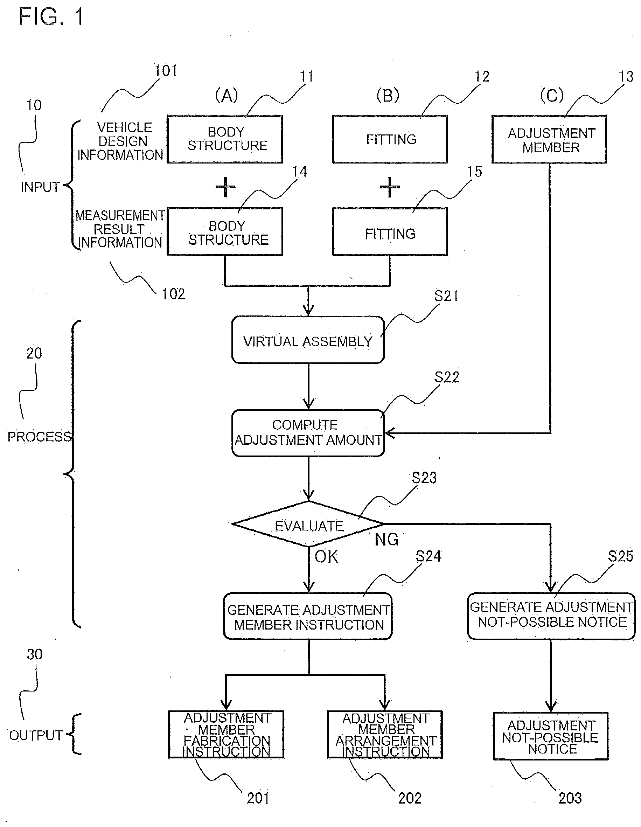

FIG. 1 illustrates an example of a flowchart according to a fitting installation instruction method. With reference to FIG. 1, the flow of processing performed by the fitting installation instruction method will be described below. A subject executing processes of the present flowchart is a processing unit of an apparatus administering fitting installation instruction, and more specifically, the subject is a fitting adjustment amount computation processing unit 104 in a fitting installation instruction apparatus 111 illustrated in the second embodiment and thereafter.

An input 10 is composed of a vehicle design information 101 and a measurement result information 102. The vehicle design information 101 includes a (A) body structure design information 11, a (B) fitting design information 12, and an (C) adjustment member design information 13, and for example, the information includes design drawings, two-dimensional or three-dimensional CAD data, design specification, and so on.

The measurement result information 102 includes a (A) body structure measurement data 14, and a (B) fitting measurement data 15, and the information includes, for example, a coordinate point group data acquired through three-dimensional measurement, a point-to-point distance measured through analog measurement using a steel tape measure or a linear scale, or a measurement result of error compared with a special jig.

Both the vehicle design information 101 and the measurement result information 102 can extract the information necessary for processing and hold the information in a data table format.

Regarding the (C) adjustment member design information 13, when appropriate adjustment methods are selected in each step, the measurement of the adjustment member itself is not necessary since sufficient accuracy is ensured with respect to the adjustment amount. However, it is also possible to use a molded object formed using a three-dimensional printer and the like, to perform measurement as required and add the information to the measurement result information 102.

In process 20, at first, based on the input data, a virtual assembly of a body structure and fitting is performed in step S21, and an ideal position is computed.

In step S22, a difference is extracted based on the positional relationship between the body structure and fitting computed in step S21, and an adjustment amount adjusting the difference is determined based on input data of the adjustment member design information 13.

In step S23, whether the adjustment amount computed in step S22 satisfies a restriction condition stored in the vehicle design information 101 is evaluated.

If the restriction condition is satisfied (OK), the procedure advances to step S24. If not (NG), the procedure advances to step S25.

In step S24, an adjustment member fabrication instruction 201 capable of realizing advance preparation of fabrication of an adjustment member, and an adjustment member arrangement instruction 202 enabling a fitting installation instruction based on the computed adjustment amount are output.

In the step of installing fitting, the installation of a predetermined fitting is performed using an adjustment member fabricated according to the adjustment member fabrication instruction 201 based on the adjustment member arrangement instruction 202.

In step S25, an adjustment not-possible notice 203 notifying that adjustment is not possible according to the currently entered condition is output. The adjustment not-possible notice 203 quantitatively provides the portion that does not satisfy the restriction condition, or the reason why the condition is not satisfied. The present notice is possibly output when the deformation of the body structure or the fitting is significant, and an effect of preventing serous delay of process is prospected by taking measures prior to installing the fitting. In this case, the fitting installation instruction can be output by taking measures such as correcting the shape of the body structure or fitting, executing re-measurement, updating the measurement result information 102, and executing the process of the present flowchart again. Further, if the deformation is insignificant, adjustment may be possible by relieving the restriction condition. The fitting installation instruction can also be output by changing the restriction condition of the vehicle design information 101 based on the adjustment not-possible notice 203, and executing the processing of the present flowchart again.

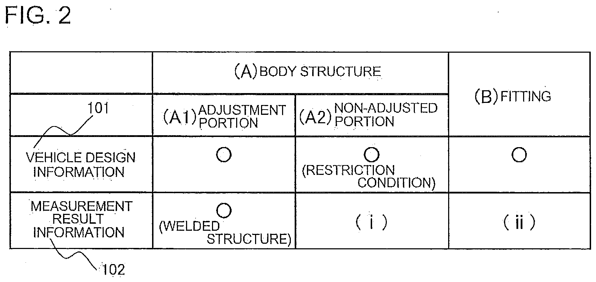

FIG. 2 is a table illustrating a classification of the input 10 of FIG. 1. The (A) body structure is classified into an (A1) adjustment portion and a (A2) non-adjustment portion. The (A1) adjustment portion is a portion that contacts the fitting via an adjustment member. The (A2) non-adjustment portion is a portion where the adjustment member is not arranged, but a portion that influences the arrangement of the fitting.

The vehicle design information 101 is prepared at the time of design, and it is an information constantly required as input (illustrated as "o" in the drawing). However, the (A2) non-adjustment portion functions as a restriction condition during adjustment.

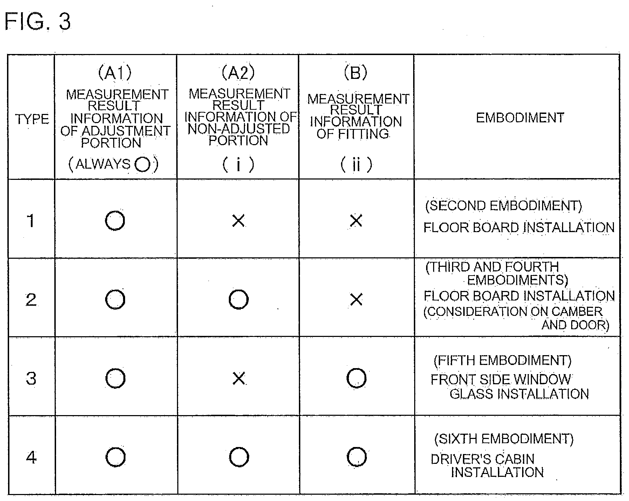

The measurement result information 102 requires a measurement operation, so it should preferably be as little as possible. The (A1) adjustment portion is a welded structure, so that the amount of deformation is great, so that the measurement result information is always required. As for the (A2) non-adjustment portion and the (B) fitting, the necessity of the measurement result information depends on the processes. Whether the measurement result information is required or not that depending on the processes is classified into (i) and (ii) in FIG. 2, and the actual example of the processes corresponding to the classification will be described with reference to FIG. 3.

FIG. 3 is a table illustrating the classification based on whether the measurement result information 102 is required, and the example of the corresponding processes (embodiments of the present invention). As illustrated in the drawing, the steps are typified into the following four types, based on the combination of whether the measurement result information 102 is required or not for the non-adjustment portion and the fitting.

(Type 1) is a case where (A2) the measurement result information of non-adjustment portion (hereinafter abbreviated as (i)) is not necessary (illustrated as "x" in the drawing) and (B) the measurement information of fitting (hereinafter abbreviated as (ii)) is not necessary, wherein the process of floor board installation is described as a second embodiment, the details of which will be described later.

(Type 2) is a case where (i) is necessary ("o" in the drawing) and (ii) is not necessary, wherein a floor board installation process considering camber is described as a third embodiment, while a floor board installation step considering door base is described as a fourth embodiment, the details of which will be described later.

(Type 3) is a case where (i) is not necessary and (ii) is necessary, wherein a mounting (installation) process of the front side window glass is described as a fifth embodiment, the details of which will be described later.

(Type 4) is a case where (i) is necessary and (ii) is also necessary, and a mounting (installation) step of the driver's cab is described as a sixth embodiment, the details of which will be described later.

The installation of fitting other than the embodiments described below can be classified into one of the above-described four types, and therefore, a manufacturing method that comprehends to various fitting in the vehicle can be provided.

<Second Embodiment>

A second embodiment is a fitting installation instruction method during floor board installation, illustrating an example corresponding to (type 1), where (A2) the measurement result information of non-adjustment portion is necessary, and where (B) the measurement result information of fitting is not necessary.

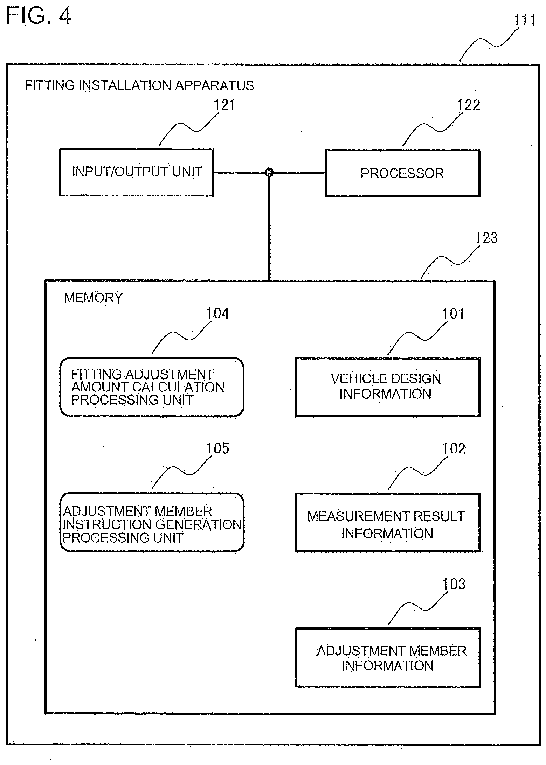

FIG. 4 is a view illustrating one example of a configuration of a floor board installation instruction apparatus according to the present embodiment.

A floor board installation instruction apparatus 111 includes an input/output unit 121, a processor 122 and a memory 123.

The memory 123 has a data unit including a vehicle design information 101, a measurement result information 102 and an adjustment member information 103, and a processing unit (program) including a fittings adjustment amount calculation processing unit 104 and an adjustment member instruction generation processing unit 105.

That is, the floor height adjustment amount calculation processing unit 104 and the adjustment member instruction generation processing unit 105 are each executed by the processor 122, and perform predetermined programmed processes. Then, the processor 122, the floor height adjustment amount calculation processing unit 104 and the adjustment member instruction generation processing unit 105 can be collectively considered as a single processing unit.

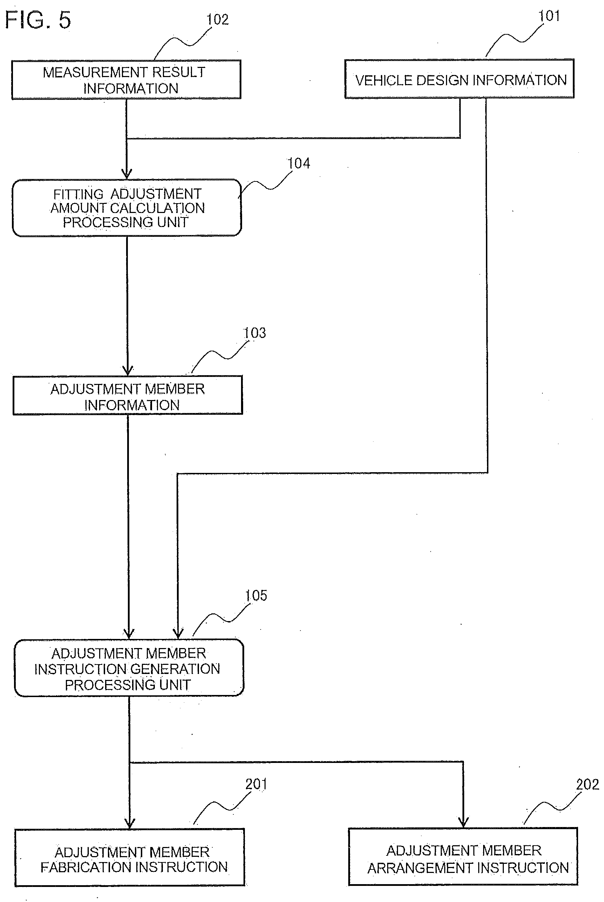

FIG. 5 illustrates one example of a flow related to the processes and input/output performed by the floor board installation instruction apparatus. The floor height adjustment amount calculation processing unit 104 receives input of the vehicle design information 101 and the measurement result information 102 from the processor 122 and executes processing, outputs the adjustment member information 103, and stores the information in the memory 123. The adjustment member information 103 is included in an instruction information of an adjustment member used during floor board installation. Thereafter, the adjustment member instruction generation processing unit 105 receives input of the vehicle design information 101 and the adjustment member information 103 and executes processing by the processor 122, and outputs an adjustment member fabrication instruction 201 and an the adjustment member arrangement instruction 202 using the input/output unit 121.

The details of the respective processing units will be described later with reference to the flowcharts.

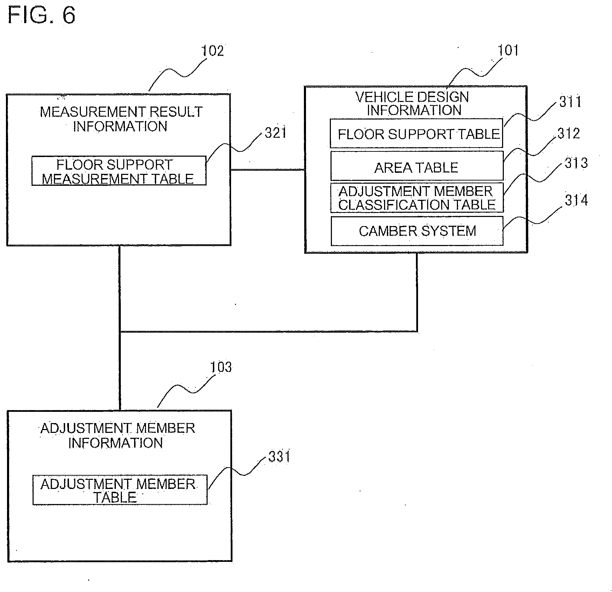

FIG. 6 is a view illustrating an example of relationship of input/output information. The vehicle design information 101, the measurement result information 102 and the adjustment member information 103 are related through data tables belonging to each information. The vehicle design information 101 includes a floor support table 311, an area table 312, an adjustment member classification table 313 and a camber system 314. The measurement result information 102 includes a floor support measurement table 321. The adjustment member information 103 includes an adjustment member table 331.

The details of each table will be described later with reference to data examples.

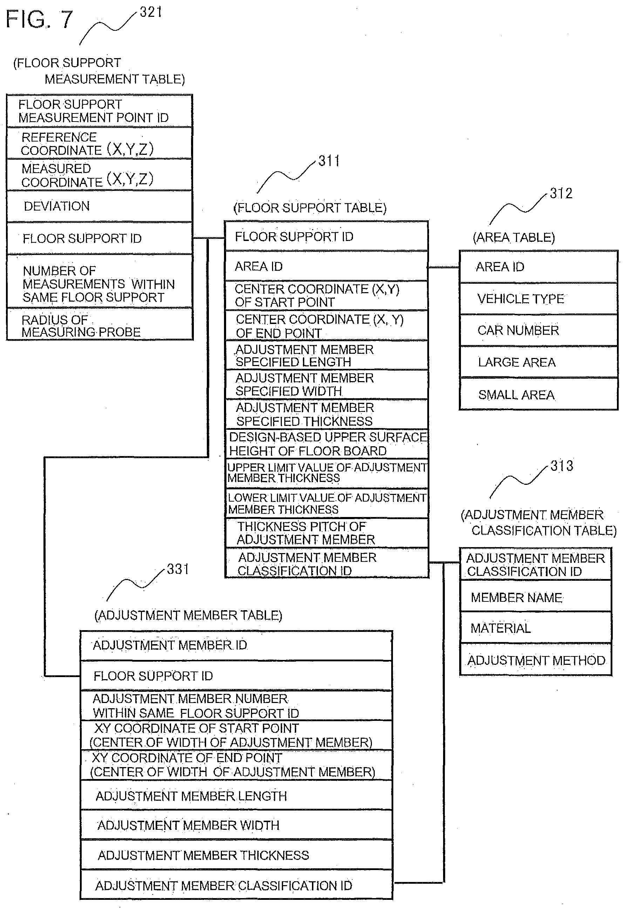

FIG. 7 is a view illustrating a relationship of data tables storing input/output information. The respective tables are related through a common field name. Each table can also include a field not shown in the drawing. Further, the coordinate field can have different fields for X, Y and Z.

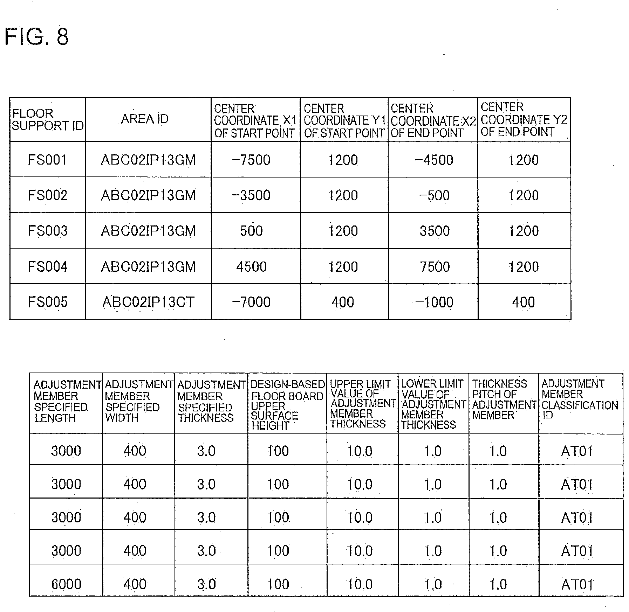

FIG. 8 illustrates a data example of the floor support table 311. The floor support table 311 includes a floor support ID specifying the floor support as a key, and an area ID indicating a rough position of the floor support, coordinates of a start point and an end point indicating a detailed position of the floor support, and specified values of an adjustment member mounted on the floor support as fields. In this example, the specified values of the adjustment member are a length, a width and a thickness of the adjustment member specified in a design drawing, an upper surface height of the floor board according to design, upper and lower limit values and a pitch of thickness of the adjustment member specified as manufacturing conditions. The thickness pitch of the adjustment member also varies according to the classification of the adjustment member, so the floor support table 311 also includes the adjustment member classification ID.

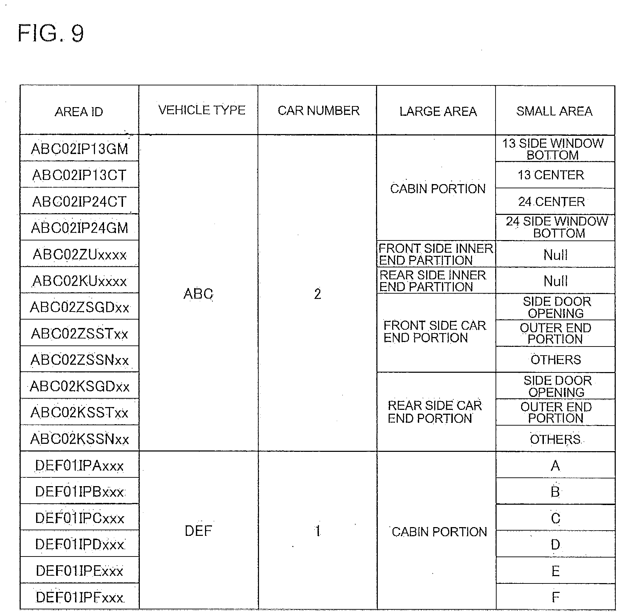

FIG. 9 illustrates a data example of the area table 312. The area table 312 has the area ID specifying the area as the key, and stores information related to the vehicle type and car number specifying the vehicle. Since the structure of the underframe differs according to the vehicle, the classification of area indicating the characteristics of the floor support is defined for each vehicle, and the area table 312 stores the data divided into two different fields, a large area field and a small area field.

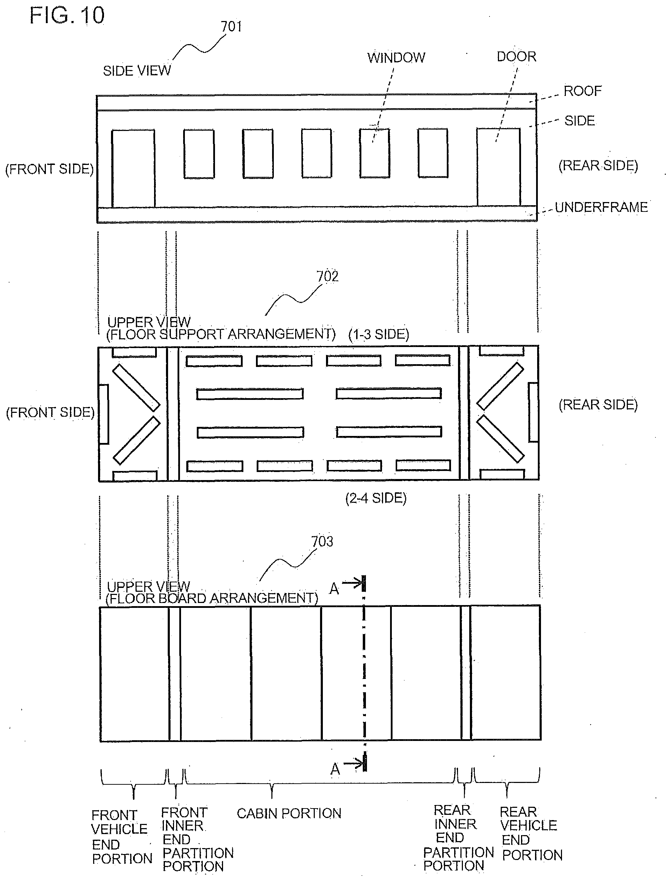

FIG. 10 is a view illustrating a floor structure of a railway vehicle.

A side view 701 shows that a vehicle body structure includes an underframe, a side body structure and a roof, and that the side body structure includes doors and windows.

An upper view (floor support arrangement) 702 illustrates an example of arrangement of the floor support. As illustrated in the data example of the area table 312 of FIG. 6, the area is classified into large areas, such as a cabin portion, a front vehicle end portion, a rear vehicle end portion, a front inner end partition portion and a rear inner end partition portion. Then, for example, the cabin portion is further classified into small areas, such as a bottom of a window on a 1-3 position side (13 side window bottom portion) or at a center of the vehicle on a 2-4 position side (24 center). In the drawing, 1 represents a front right side, 2 represents a front left side, 3 represents a rear right side, and 4 represents a rear left side.

An upper view (floor board arrangement) 703 illustrates an example of arrangement of floor boards. It can be seen that the floor boards are supported by a plurality of floor supports.

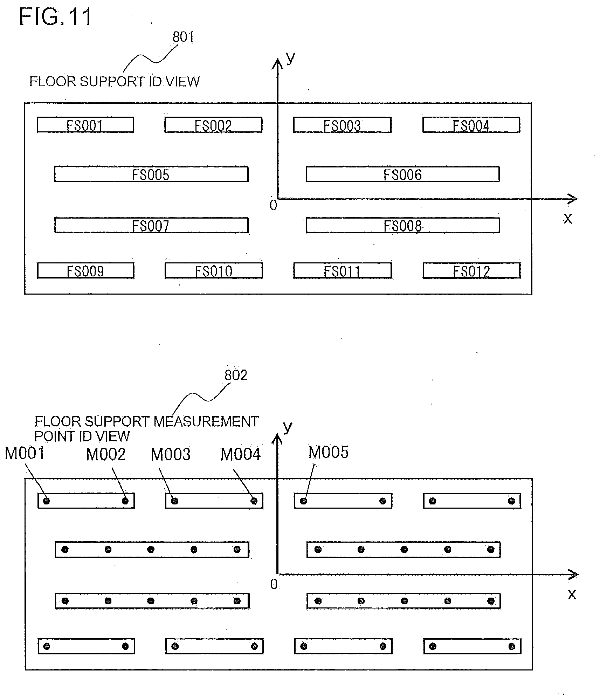

FIG. 11 is a view illustrating a floor support and floor support measurement points of the cabin portion.

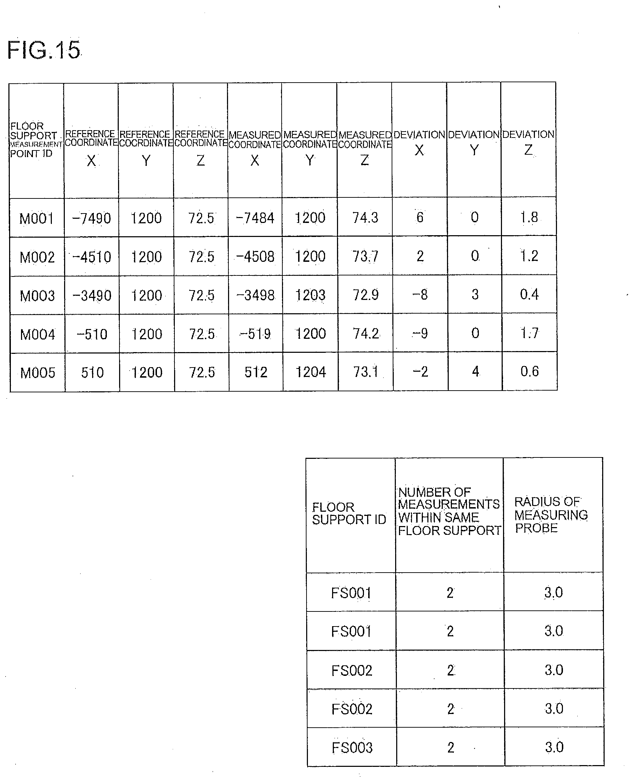

A floor support ID view 801 illustrates arrangements of the floor support IDs of the floor support table 311 illustrated in FIG. 8. A floor support measurement point ID view 802 illustrates arrangements of floor support measurement point IDs of the floor support measurement table 321 illustrated in FIG. 15. Further, an XY coordinate axis is illustrated in the drawing, indicating an example of reference of the XY coordinates in the data example of the various data tables (the floor support table 311 and the floor support measurement table 321).

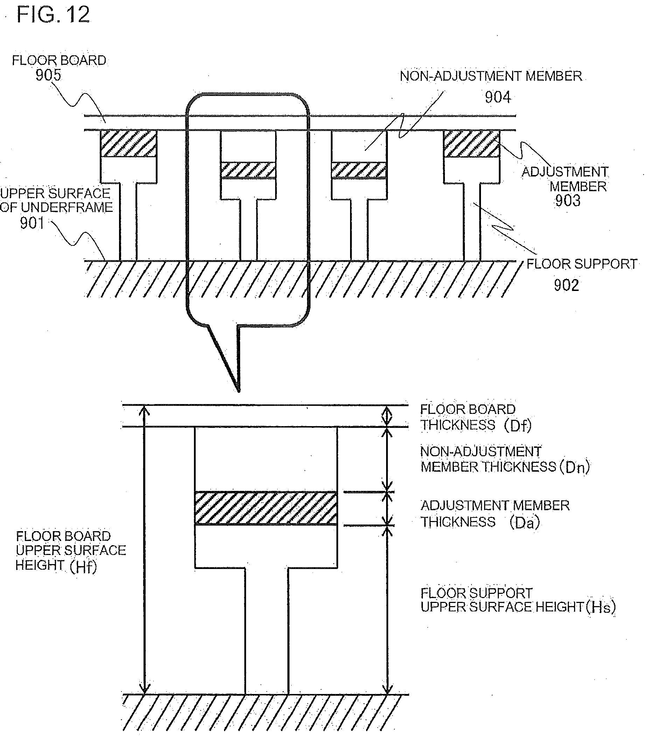

FIG. 12 is a view illustrating a cross-sectional structure of the floor, illustrating an A-A cross-section of the upper view (floor board arrangement) of FIG. 10. In a vehicle adopting a structure where a large amount of equipments are installed under the floor, such as in high-speed vehicles like the Shinkansen, a floating floor structure is often adopted where a space is created between the underframe and the floor board through which wires and ducts are communicated. Floor supports 902 are disposed on an upper surface of an underframe 901 acting as a foundation of the body structure. In order to adjust a height of a floor board 905, an adjustment member 903 for adjusting the floor height is disposed on each floor support 902. There are areas where a non-adjustment member 904 having no adjusting allowance is required to be installed between the adjustment member and the floor board, so that the amount of adjustment of the adjustment member 903 must be determined while considering the non-adjustment member 904.

Based on the enlarged view (lower drawing of FIG. 12) of the adjustment member, it can be recognized that a floor board upper surface height (Hf) is the same value as a total value of a floor support upper surface height (Hs), an adjustment member thickness (Da), a non-adjustment member thickness (Dn) and a floor board thickness (Df). The following expression 1 represents this calculation.

$$Hf = Hs + Da + Dn + Df \quad \dots \quad \text{(Expression 1)}$$

The vehicle body structure is a welded structure, and especially, the underframe requires a large amount of welding, so the upper surface height of the floor supports disposed on the underframe is varied easily. Now, the actual upper surface height of floor board is denoted as (Hs'). In some cases, the upper surface of the floor board may ideally be a curved surface, such as a camber, and an ideal upper surface of floor board height is denoted as (Hf). Since the non-adjustment member thickness (Dn) and the floor board thickness (Df) are manufactured as independent members, the accuracy of dimension is sufficiently high compared to the vehicle body structure, and the difference between the design value and the actual value can be ignored when computing the amount of adjustment of the floor board installation. The adjustment member has an adjusting allowance intended to cancel the difference between the design value and the actually fabricated value, wherein the adjustment member thickness after adjustment is denoted as (Da'). Then, the following expression 2 holds true.

$$Hf' = Hs' + Da' + Dn + Df \quad \dots \quad \text{(Expression 2)}$$

Further, based on the difference between expression 2 and expression 1, the following expression 3 holds true.

$$Da' = (Hf' - Hf) - (Hs' - Hs) + Da \quad \dots \quad \text{(Expression 3)}$$

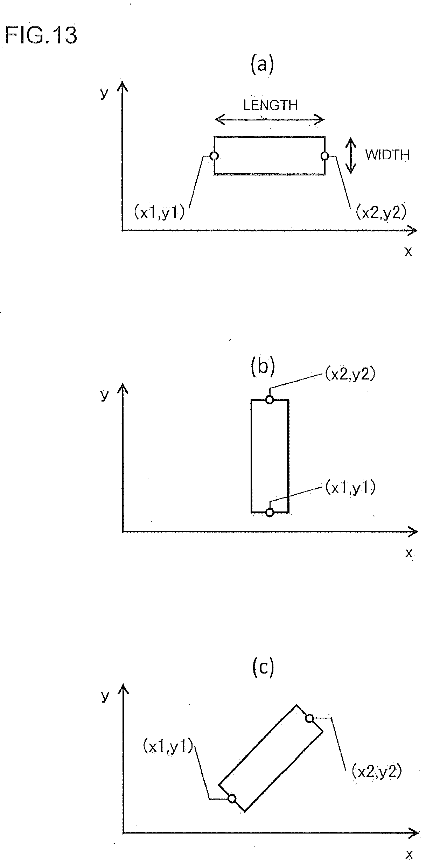

FIG. 13 is a drawing illustrating an example of a start point and an end point of the floor support. From the viewpoint of structure, the floor support generally adopts a rectangular shape when seen from above. As an example of the method for defining the floor support position, if the long side of the rectangle is referred to as a length and the short side is referred to as a width, two middle points of the width of the short sides are obtained, and a point having a smaller X, Y coordinate can be referred to as a start point (x1, y1) and a point having a greater coordinate can be referred to as an end point (x2, y2). According to this method, as illustrated in FIG. 13, a start point and an end point can be defined uniquely, regardless of how the floor support is arranged. FIG. 13 (a) illustrates a case where the long side is arranged along an x axis, FIG. 13 (a) illustrates a case where the long axis is arranged along a y axis, and FIG. 13 (a) illustrates a case where the long side is arranged between x and y axes. If the floor support is not a rectangle, a method can be adopted where the coordinates of all vertexes are retained, or where the respective sides are defined by a polynomial.

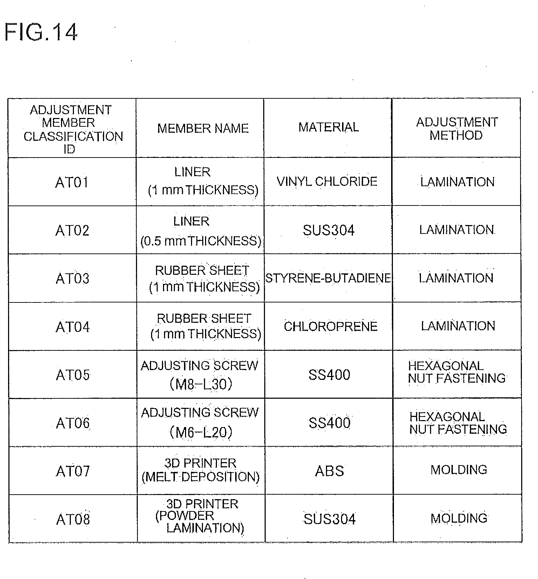

FIG. 14 illustrates a data example of the adjustment member classification table 313. The adjustment member classification table 313 has an adjustment member classification ID specifying the classification of the adjustment member as the key, and a name and material of the member and adjustment method of height using the member as the fields. A height adjustment method includes a method of laminating vinyl chloride liners that are inexpensive and easily formed, a method of laminating rubber sheets with the aim to realize noise reduction and vibration absorption effects, and so on.

Other possible methods include a method of adjusting height by installing adjustment screws at a number of locations, instead of laminating the whole surface of the floor support, or a method of filling liquid sealing material into an area haring four sides surrounded by panels and the like. It is also possible to perform molding using a 3D printer. In the adjustment method other than laminating, the thickness pitch of the adjustment member can be set steplessly.

FIG. 15 is a data example of the floor support measurement table 321. The floor support measurement table 321 has a floor support measurement point ID specifying a measurement point on the floor support as the key, and reference coordinates of measurement defined prior to measurement based on the design drawing, coordinates of measurement result measured in a vicinity of the reference coordinate, deviation of reference coordinates and measured coordinates, a floor support ID specifying a floor support to which the floor support measurement point ID belongs, a number of measurements within the same floor support ID and a radius of a measuring probe used for measurement as the fields.

The measurement of the floor support is executed, prior to floor board installation, via a three-dimensional measurement (measurement method acquiring a surface profile of the target as three-dimensional coordinate data). A three-dimensional measurement device can be, for example, a laser tracker acquiring a center coordinate of a tip ball of a contact-type measuring probe, or a laser scanner acquiring a surface coordinate from a reflection of laser irradiated from a non-contact measurement device.

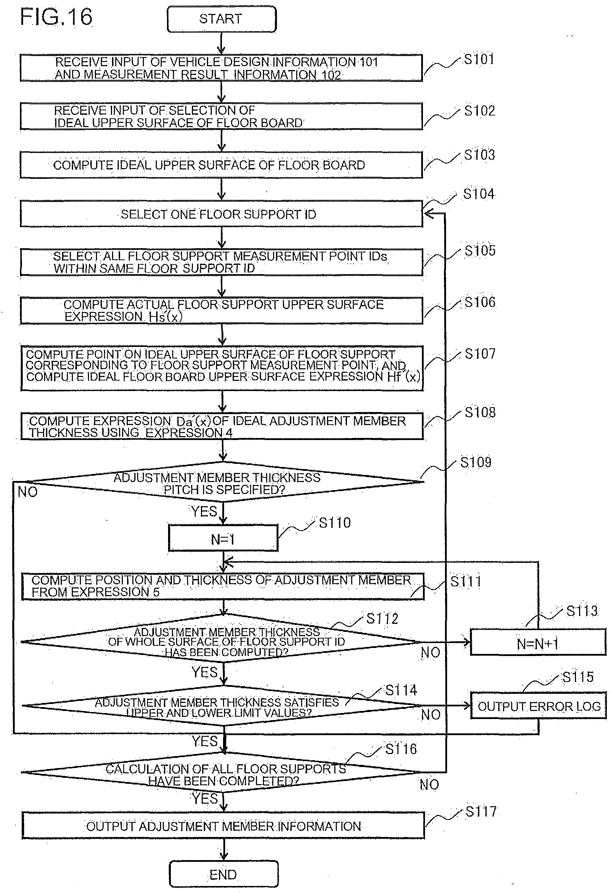

When a contact-type measurement device is used, the probe radius value is required, so as to offset the radius portion of the tip ball. In the description of FIG. 16 and thereafter, offset processing is carried out when offset is required, and processing is carried out as a point on a surface. When the non-contact measurement device is used, there is no need to consider offset, but the measurement points being acquired becomes enormous, so that the processing can be simplified by selecting representative points.

Moreover, a method of acquiring three-dimensional coordinates can be adopted easily as the three dimensional measurement method that uses a measuring instrument measuring the vertical direction distance with respect to a horizontally irradiated laser, i.e., laser level, while measuring a measurement position in a plane direction via a measure and the like.

FIG. 16 illustrates an example of a flowchart according to a calculation processing of amount of adjustment of floor support height performed by the fitting adjustment amount calculation processing unit 104 of the fitting installation instruction apparatus 111.

The operation based on the flowchart of FIG. 16 will be described below.

In step S101, the fitting adjustment amount calculation processing unit 104 of the fitting installation instruction apparatus 111 (hereinafter simply referred to as "the fitting adjustment amount calculation processing unit 104") receives necessary vehicle design information 101 and measurement result information 102 as input data from the memory 123 (FIG. 5). Selection of a target vehicle is required for input.

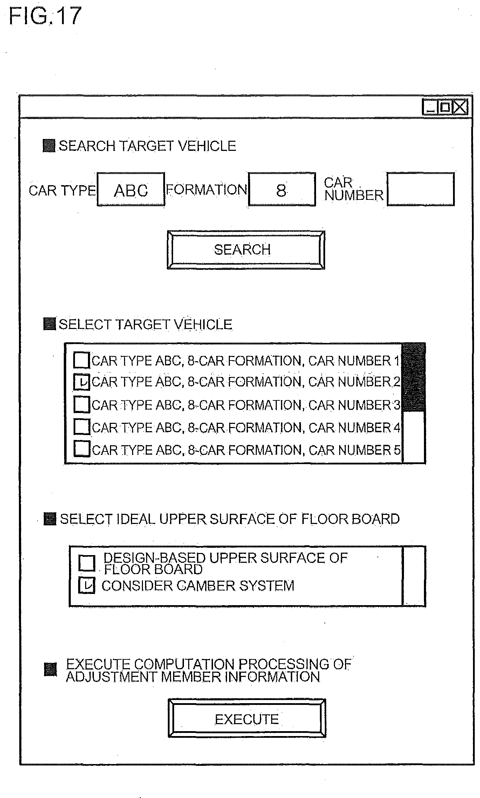

For example, as shown in FIG. 17, a "search target vehicle" column displayed on an input screen of the input/output unit 121 of the fitting installation instruction apparatus 111 awaits data entry. When a keyword is entered to the search items and a search button is pressed, a list of entered target vehicles is output. When a target vehicle is selected from the list, the fitting adjustment amount calculation processing unit 104 selectively receives necessary information for processing, based on various data of the vehicle design information 101 and the measurement result information 102 related to the selected vehicle.

In step S102, the floor height adjustment amount calculation processing unit 104 receives input of selection of the ideal upper surface of floor board through the input/output unit 121.

For example, as illustrated in FIG. 17, in the "selection of ideal upper surface of floor board" column displayed on the input screen of the input/output unit 121, one can choose between whether the design-based floor board upper surface height is used as it is for reference, or to consider the camber system.

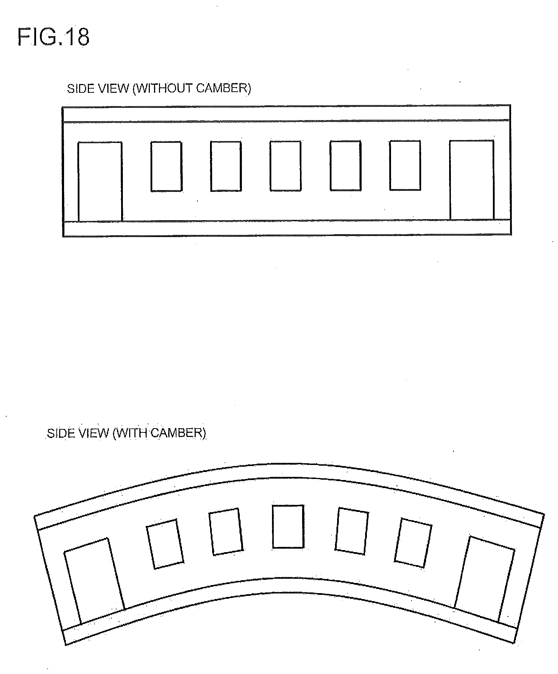

FIG. 18 is a view illustrating a camber. In the design drawing, the railway vehicle is in a flat state as shown in the side view (without camber). On the other hand, when fabricating the body structure, a camber is formed as shown in the side view (with camber) (however, the camber is exaggerated in the drawing). A camber is a know-how adopted when fabricating a vehicle, with the aim to prevent strength deterioration and prevent a bottom portion of the vehicle from exceeding a limit dimension of the vehicle, even if the body structure is deflected by load of various equipment mounted on the car body during the fitting step and the load of the passengers. A camber is defined by a camber system defining a curvature. An amount of adjustment of floor support height can be calculated based on an ideal upper surface position of the floor board during floor board installation, by taking the camber system into consideration.

In step S103, the fitting adjustment amount calculation processing unit 104 computes an ideal upper surface of floor board based on the selection of ideal upper surface of floor board received in step S102. A plane surface is computed if the camber system is not taken into consideration, and a curved surface is computed if the camber system is taken into consideration. The processes of step S103 and thereafter refer to a process of computing an adjustment member information executed when an enter button is pressed on an input screen illustrated in FIG. 14.

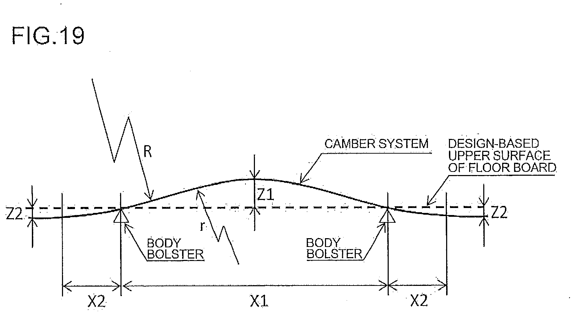

FIG. 19 is an explanatory view of the camber system. The camber system can be defined by a polynomial of a second degree or greater, having the center of a body bolster supporting a bogie set as the reference, and a distance X1 in an X direction between body bolsters, a distance X2 in the X direction from the body bolster to the end surface of the underframe, a distance Z1 in a Z direction from the design-based upper surface of the floor board at the center of the underframe, a distance Z2 in the Z direction from the design-based upper surface of the floor board at the end surface of the underframe, and curvature radii R and r, as parameters.

In step S104, the fitting adjustment amount calculation processing unit 104 selects one floor support ID from the floor support table 311 (FIG. 8) of the target vehicle. The order of selection does not influence the processing, and in the end, all target floor support IDs are selected and respectively processed.

In step S105, the fitting adjustment amount calculation processing unit 104 selects all floor support measurement point IDs within the floor support ID selected in step S104. The number of floor support measurement point IDs being selected corresponds to the number of measurements within the same floor support ID of the floor support measurement table 321 (FIG. 15).

In step S106, the fitting adjustment amount calculation processing unit 104 computes an actual floor support upper surface expression Hs' (x) based on the floor support measurement point ID selected in step S105.

In step S107, the fitting adjustment amount calculation processing unit 104 computes a point on an ideal upper surface of the floor support corresponding to the floor support measurement point based on the floor support measurement point ID selected in step S105, and computes an ideal upper surface of floor board expression Hf (x).

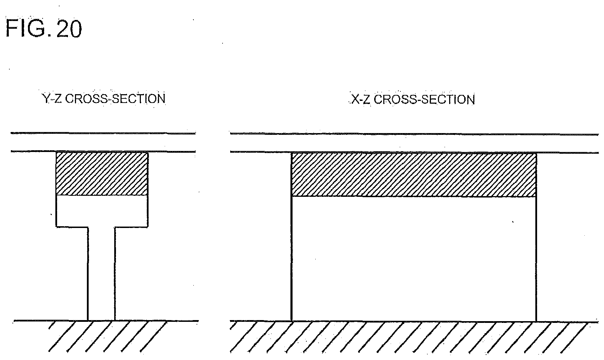

The following describes the floor support ID "FS001" of FIG. 11 as an example, with reference to FIGs. 20 through 25. The floor support ID "FS001" has two measurement points (M001, M002), as illustrated in the floor support measurement point ID view 802 of FIG. 11.

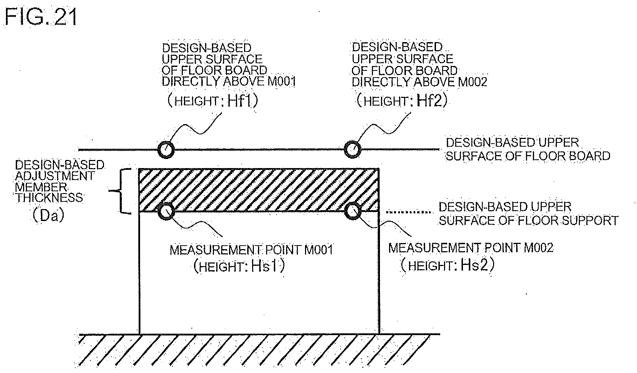

FIG. 20 illustrates one example of a cross-sectional view (Y-Z cross-section and X-Z cross-section) of the floor structure. Hereafter, the cross-sectional views illustrated in FIGs. 21 through 25 are X-Z cross-sections.

FIG. 21 is a view illustrating a reference coordinate in a cross-sectional view of the floor structure. The reference coordinate of the floor support measurement table 321 (FIG. 15) is defined on the design-based upper surface of the floor support. Further, the design-based upper surface height of the floor board can be computed using the design-based upper surface height of the floor board in the floor support table 311 (FIG. 8), and the design-based upper surface of the floor board immediately above the floor support measurement point can be computed.

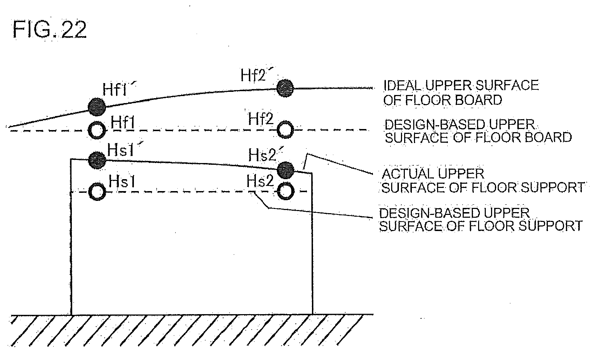

FIG. 22 is an explanatory view of the coordinates having reflected the measurement result in the cross-sectional view of the floor structure. If the actual upper surface of the floor support is dislocated from the design-based upper surface of the floor support, the heights of the measurement points (Hs1' and Hs2') will differ from the reference coordinate heights (Hs1 and Hs2). Similarly, if the ideal upper surface of the floor board computed in step S103 is dislocated from the design-based upper surface of the floor board, the ideal floor board upper surface heights (Hf1' and Hf2') differ from the design-based floor board upper surface height (Hf1 and Hf2).

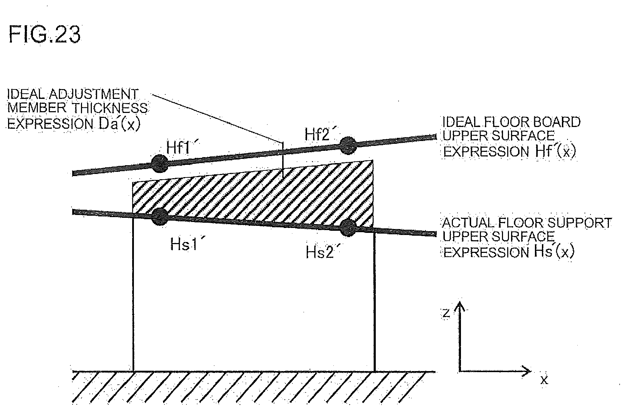

FIG. 23 is an explanatory view of an expression defining a floor support and a floor board in the cross-sectional view of the floor structure. An expression Hs' (x) of the actual upper surface of the floor support in the x direction is computed as a straight line passing points at heights Hs1' and Hs2' in step S106.

Similarly, an expression Hf' (x) of the ideal upper surface of the floorboard in the x direction is computed as a straight line passing points at heights Hf1' and Hf2' in step S107.

In step S108, the fitting adjustment amount calculation processing unit 104 computes an expression Da' (x) of an ideal adjustment member thickness using the following expression 4 having generalized the aforementioned expression 3.

$$Da'\ (x) = (Hf'\ (x) - Hf) - (Hs'\ (x) - Hs) + Da \qquad \dots \qquad (\text{Expression 4})$$

In step S109, the fitting adjustment amount calculation processing unit 104 determines whether an adjustment member thickness pitch, which is an item in the floor support table 311 (FIG. 8), is specified or not.

If the adjustment member thickness pitch is set as a specified value (YES), the fitting adjustment amount calculation processing unit 104 must divide the adjustment member within the same floor support ID to satisfy the adjustment member thickness pitch, and compute the position, length, width and thickness of the respective adjustment members being divided. In that case, the fitting adjustment amount calculation processing unit 104 performs processes of steps S110 through S112.

If the adjustment member thickness pitch is not specified and stepless adjustment is possible (NO), the value acquired by expression Da' (x) computed in step S108 can be adopted as it is as the adjustment member thickness. For example, if a three-dimensional printer and the like is used, molding is enabled based on the calculated expression Da'(x). In that case, there is no need to perform the processes of steps S110 through S112.

In step S110, the floor height adjustment amount calculation processing unit 104 defines an integer value N as an internal variable, and substitutes N=1.

In step S111, position, length, width and thickness of an adjustment member satisfying the internal variable N is calculated from expression 5 mentioned later.

In step S112, the fitting amount calculation processing unit 104 determines whether the adjustment member thickness of the whole surface of the floor support ID selected in step S104 has been calculated. If the whole surface has been calculated (YES), the procedure advances to step S114, and if not (NO), the procedure advances to step S113.

In step S113, the fitting adjustment amount calculation processing unit 104 adds 1 to the internal variable N, and executes step S111 again.

Now, the following expression 5 will be described. Expression 5 shows how much value can be set as Da'(x) by multiplying the pitch numbers NP (adjustment member thickness) in accordance with the adjustment member thickness pitch P.

When Da' (x) < P/2,

Da' (x) = 0; and

when NP - P/2 $\leq$ Da' (x) < NP + P/2 (provided that N is an integer of N$\geq$1),

$$Da'\ (x) = NP \qquad \dots \qquad (\text{Expression 5})$$

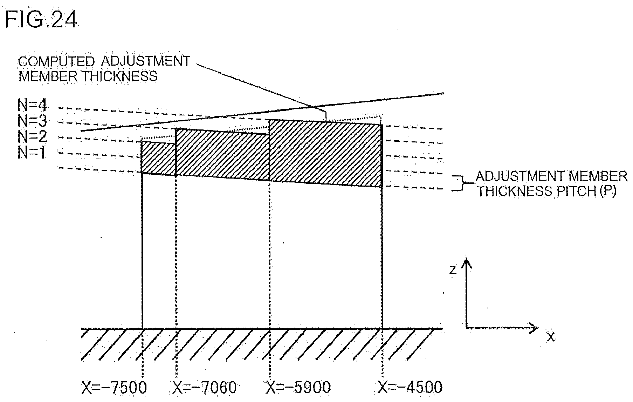

FIG. 24 is a explanatory drawing of an adjustment member thickness calculated by the processes of steps S110 through S113 in the cross-sectional view of the floor structure. The floor support ID "FS001" has a range of -7500 to -4500 in the X direction. Based on the aforementioned expressions 4 and 5, there is no Da' (x) that satisfies N=1 within this range (that is, there is no Da' (x) that satisfies $P/2 \leq Da'(x) < 3P/2$). If N = 2, 3 or 4, there is a Da' (x) that satisfies the expression, and when N = 4, the adjustment member thickness of the whole range where X is from -7500 to -4500 can be computed.

It is defined that Da' (x) = 0 when Da' (x) < P/2 in expression 5 (that is, the adjustment member thickness becomes 0), but if it is not preferable from the viewpoint of design for the floor support to directly contact the floor board, it is possible to prepare a special adjustment member and define that Da' (x) = P/2, for example. Further, a method is adopted to designate the range by rounding off one digit below the adjustment member thickness pitch P, but it is also possible to define the designated range by rounding-up or rounding-down the value.

In step S114, the fitting adjustment amount calculation processing unit 104 determines whether the adjustment member thickness calculated in step S111 satisfies the upper limit value and the lower limit value of the adjustment member thickness defined in the floor support table 311. If all the adjustment members satisfy the condition (YES), the procedure advances to step S116, but if there is an adjustment member not satisfying the condition (NO), the procedure advances to step S115.

In step S115, the fitting adjustment amount calculation processing unit 104 outputs a list of adjustment members not satisfying the condition of step S114 as an error log, and advances to step S116. The fitting adjustment amount calculation processing unit 104 can have a function to output a message, or to end the processing in a forced manner when outputting the error log,. As described, whether the deformation amount of the floor support before installation of the floor board is within the range of adjusting allowance of the adjustment member or not can be determined by whether the error log has been output. Therefore, processing delay that occurs when a problem is found during floor board installation can be prevented in advance. Moreover, the content of the error can be evaluated quantitatively, and appropriate processes such as re-welding of the floor support can be performed.

In step S116, the fitting adjustment amount calculation processing unit 104 determines whether the processing of all target floor support IDs has been completed. If completed (YES), the procedure advances to step S117, and if not (NO), the procedure returns to step S104.

In step S117, the fitting adjustment amount calculation processing unit 104 outputs the adjustment member information 103 computed in the above-described step S111, and ends all processes related to calculating the amount of adjustment of the floor height.

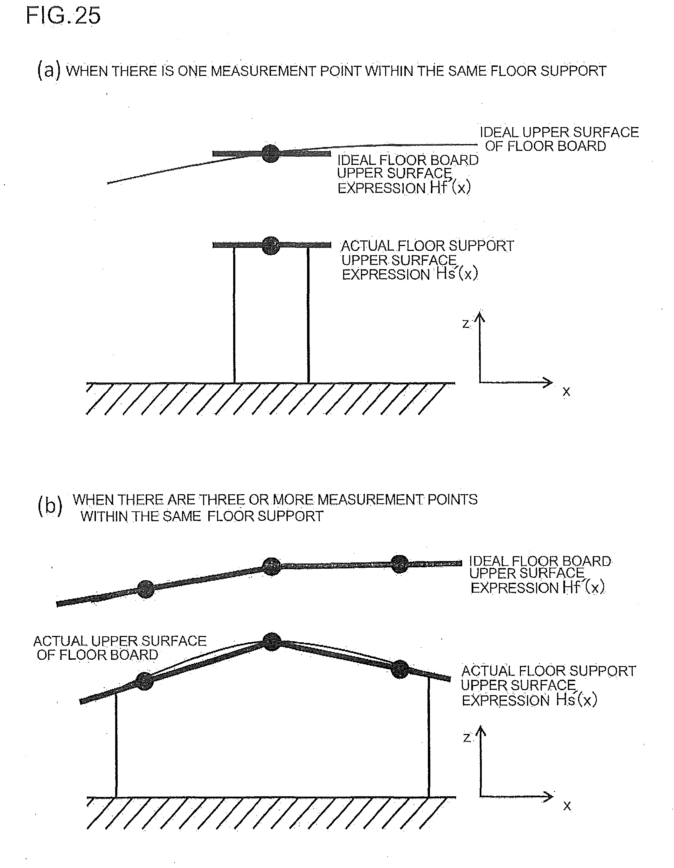

FIG. 25 is an explanatory view of an example where the expression of the upper surface of the floor support and the expression of the upper surface of the floor board calculated in steps S106 and S107 differ, in the cross-sectional view of the floor structure.

If the length of the upper surface of the floor support is short and inclination within the range is considered to be sufficiently small, the measurement time can be shortened by defining only one measurement point within the upper surface of the floor support. An expression is defined as a straight line parallel to an X axis passing the measurement point as shown in FIG. 25(a), as an example of a case where there is one measurement point within the upper surface of the same floor support.

On the other hand, if the length of the upper surface of the floor support is long, the number of measurement points within the upper surface of the floor support can be increased to minimize the error between the actual value and the computed expression. For example, if there are three or more measurement points within the upper surface of the same floor support, as shown in FIG. 25(b), an expression is computed as a polygonal line connecting adjacent measurement points. According to such method, definition is enabled using a linear expression classified within the range of the X axis, so that the amount of computation can be suppressed. Definition is also enabled using a polynomial of the second degree or greater passing the measurement points, so that the errors between actual value and expression can be reduced even further.

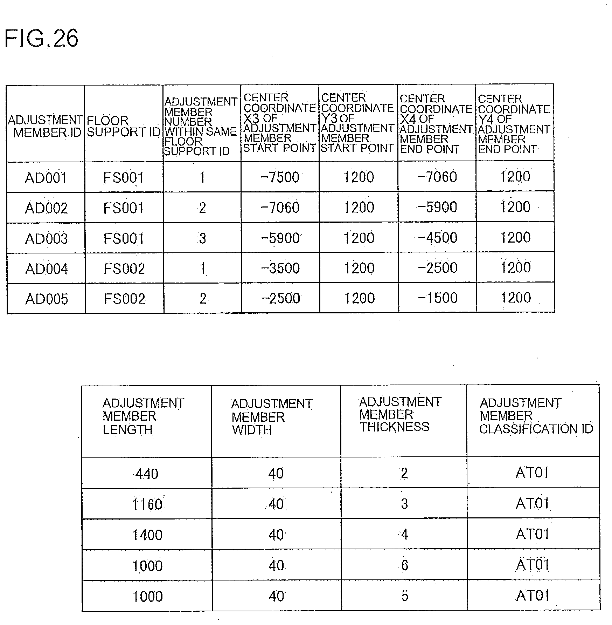

FIG. 26 is a data example of the adjustment member table 331. The adjustment member table 331 includes an adjustment member ID specifying the computed adjustment member as the key, and a floor support ID on which the adjustment member is to be attached, an adjustment member number within the same floor support ID, coordinates of the start point and end point of the adjustment member, the length, width and thickness of the adjustment member, and the adjustment member classification ID as the fields.

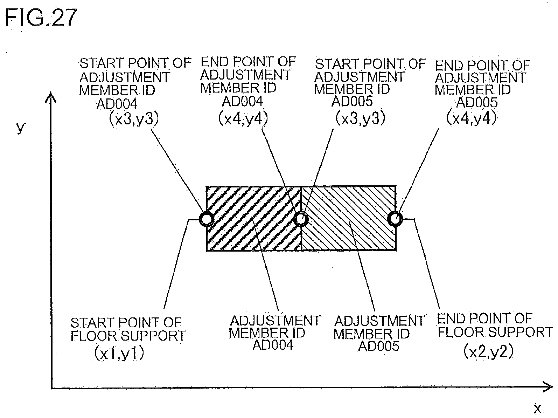

FIG. 27 is a view illustrating a start point and an end point of the adjustment member. In FIG. 26, as can be seen from the examples of adjacent adjustment member IDs "AD004" and "AD005" within the same floor support ID, the end point (x4, y4) of adjustment member ID "AD004" and the start point (x3, y3) of adjustment member ID "AD005" have the same coordinate values.

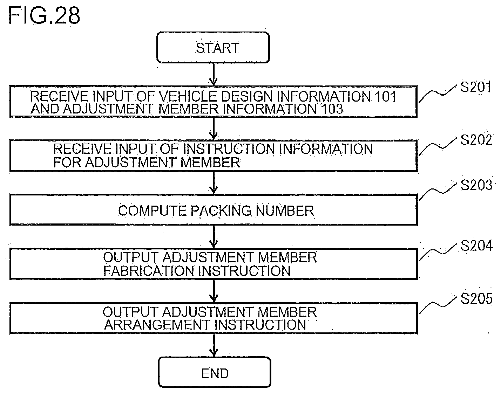

FIG. 28 illustrates an example of a flowchart related to an output processing of an adjustment member fabrication instruction and an adjustment member arrangement instruction performed by the adjustment member instruction generation processing unit 105 of the fitting installation instruction apparatus 111.

The operation based on the flowchart of FIG. 28 will be described below.

In step S201, the adjustment member instruction generation processing unit 105 of the fitting installation instruction apparatus 111 (hereinafter simply referred to as "the adjustment member instruction generation processing unit 105") receives the necessary vehicle design information 101 and the adjustment member information 103 as an output result of the fitting adjustment amount calculation processing unit 104 as input data from the memory 123 (FIG. 5).

In step S202, the adjustment member instruction generation processing unit 105 receives input of the instruction information with respect to the adjustment member via the input/output unit 121. The term instruction information refers to information such as an order number, orderer, order date and delivery date of fabrication of the adjustment member, and information on installation date and the like for arranging the adjustment member. The input of the instruction information should be performed, for example, through the input screen of the input/output unit 121.

In step S203, the adjustment member instruction generation processing unit 105 computes packing numbers. The term packing number refers to a number used for packing the fabricated adjustment member and for arranging the same. For example, the selection of adjustment member during floor board installation can be facilitated by packing the adjustment member per floor support ID according to the packing number. Moreover, loading to vehicles and operations can be facilitated, for example, by preparing dedicated trays, allocating trays according to packing number and defining the order of arrangement within the tray.

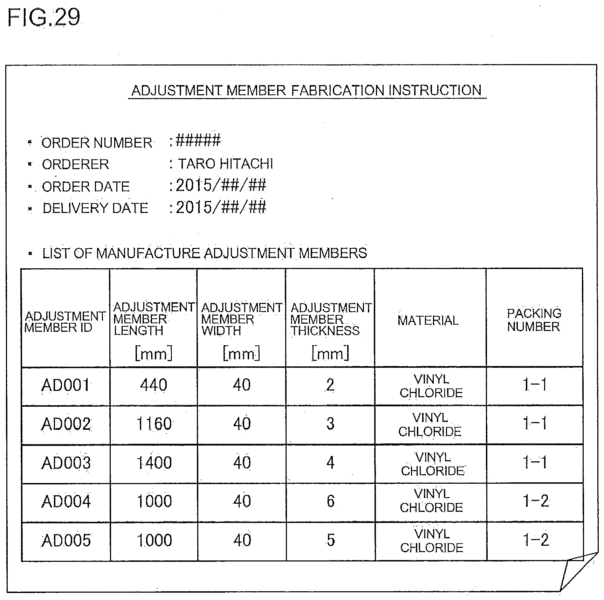

In step S204, the adjustment member instruction generation processing unit 105 outputs the adjustment member fabrication instruction 201 using the input/output unit 121 (FIG. 5). FIG. 29 is an example of the adjustment member fabrication instruction 201. Information of a list of fabricated adjustment members is output in succession to the order number and other instruction information.

By fabricating adjustment members according to the output adjustment member fabrication instruction 201, effects such as reduction of the number of steps and reduction of operational errors can be realized, compared to the conventional method of creating adjustment members each time a floor board is installed.

Moreover, advance fabrication by off-line setting is enabled in fabricating the adjustment member. Since three-dimensional measurement can be performed before the days required to fabricate the adjustment member, all the necessary adjustment members can be prepared before the timing of floor board installation, and the lead time of the vehicle manufacturing process can be shortened.

According to the prior art floor board installation, the amount of adjustment of the floor height cannot be ascertained in advance, so that there was a need to prepare and retain all the adjustment members that may become necessary as much as possible. However, the above-described adjustment member fabrication instruction 201 being output realizes an effect of preparing only the necessary number of members, and the supplying cost of the adjustment member can be cut down.

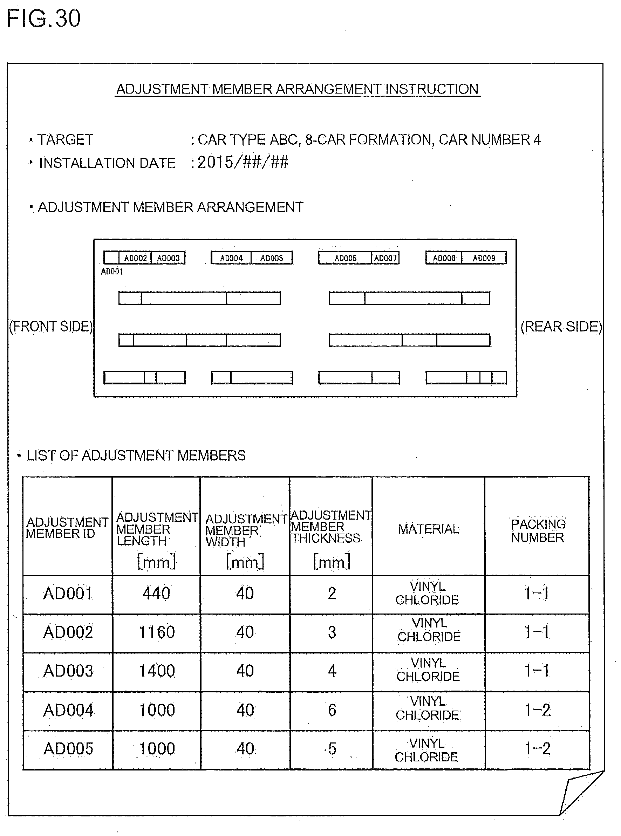

In step S205, the adjustment member instruction generation processing unit 105 uses the input/output unit 121 to output the the adjustment member arrangement instruction 202 (FIG. 5). FIG. 30 illustrates an example of the the adjustment member arrangement instruction 202. In succession to instructing the target vehicle and the installation date, the arrangement plan of the adjustment member and the list of adjustment members are output. The arrangement plan of the adjustment member can be generated based on the coordinates of the start point and end point of the respective adjustment members, and the length and width of the adjustment members, included in the adjustment member table 331. The arrangement plan has an effect of clarifying the installation operation, and reducing the number of steps of floor board installation. Further, the list of adjustment members can display, in addition to the illustrated information, the start point and end point coordinates of the adjustment members stored in the adjustment member table 331.

As the next step of floor board installation, when the adjustment members are fabricated based on the adjustment member fabrication instruction 201 (FIG. 29), the adjustment members are arranged in accordance with the the adjustment member arrangement instruction 202 (FIG. 30), the floor height is adjusted, and floor board installation operation is performed.

<Third Embodiment>

In contrast to the second embodiment, a third embodiment is an embodiment of including the process of additionally reflecting the measurement result information as reference of the camber. That is, the present embodiment corresponds to (pattern 2), which is an example of a case where a measurement result information of the non-adjustment portion is required (A2), and a measurement result information of the fitting is not required (B).

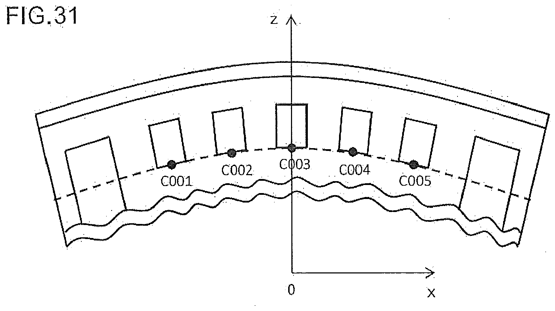

FIG. 31 is a side view of the body structure according to the third embodiment. Regarding the respective elements constituting the vehicle body structure, the underframe supporting the body structure requires a large amount of weld, and distortion tends to occur. If the amount of distortion is greater than the thickness pitch of the adjustment member, the influence cannot be ignored.

When defining the ideal upper surface of the floor board, an ideal upper surface of the floor board following the actual fabricated body structure can be defined, by correcting the camber system using components other than the underframe, such as a three-dimensional measurement result of a bottom of a window opening on the side illustrated in FIG. 31, compared to using the measurement points on the underframe or the design-based camber system as it is. For example, a space for mounting a side interior panel can be ensured by adopting measurement points of window openings, such as the bottom of the window openings (C001 through C005 in the drawing) as the camber reference, and an effect of reducing the number of adjustment steps during attachment can be exerted. Further, the interior space can be made uniform, for example, by adopting the measurement points of a roof space as the camber reference. In addition, the characteristic portions of the sides or the roof can be measured and adopted as the camber reference.

Further, ideal upper surface of the floor board considering the torsion of the vehicle body structure can be defined using the measurement results of both side surfaces.

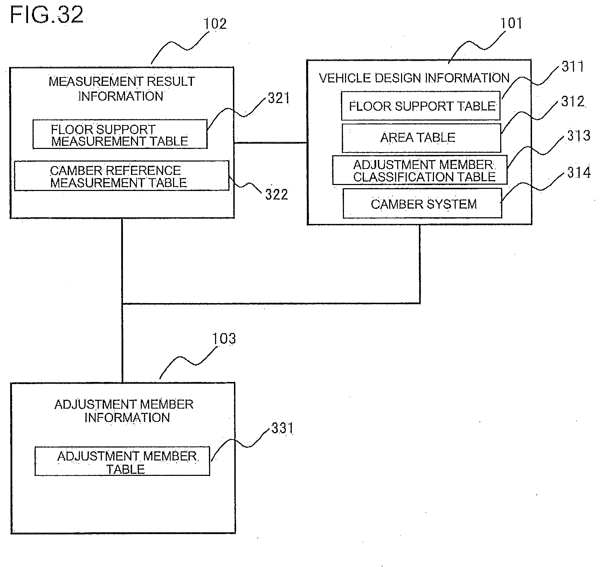

FIG. 32 is a view illustrating the relationship of input/output information related to the third embodiment. A camber reference measurement table 322 is added to the measurement result information 102 of the second embodiment. That is, the measurement data stored in the camber reference measurement table 322 corresponds to the measurement result information of the non-adjustment portion.

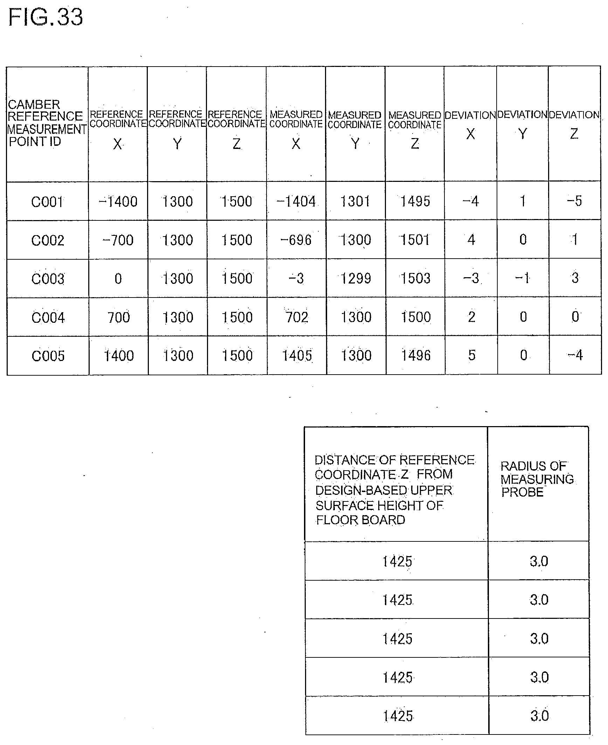

FIG. 33 is a data example of the camber reference measurement table 322 according to the third embodiment. The camber reference measurement table 322 includes a camber reference measurement point ID specifying the measurement point for camber reference as the key (the drawing illustrates a case where the measurement point IDs (C001 through C005) of the bottom of the window openings of FIG. 31 are set as the camber reference), and a reference coordinate of measurement defined before the measurement based on the design drawing, a coordinate of the measurement result measured near the reference coordinate, a deviation of the reference coordinate and the measured coordinate, a distance from the design-based floor board upper surface height of reference coordinate Z, and a radius of the measuring probe used for measurement as the fields.

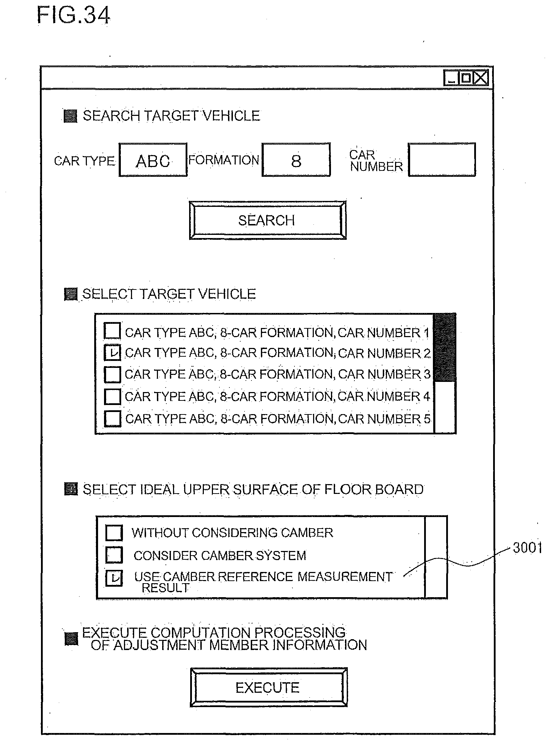

FIG. 34 is an example of an input screen of the input/output unit 121 of the fittings installation instruction apparatus 111 according to the third embodiment. Options 3001 using the camber reference measurement result is added as an item of the "selection of ideal upper surface of floor board" column with respect to the second embodiment.

The fitting adjustment amount calculation processing unit 104 receives input of the selection of the ideal upper surface of floor board in step S102 of the flowchart illustrated in FIG. 16, similar to the second embodiment. In the third embodiment, the camber reference measurement result is selected to be used.

In step S103, the fitting adjustment amount calculation processing unit 104 computes the ideal upper surface of floor board based on the option selected in step S102. At this time, the camber reference measurement result added in the third embodiment is used to set a position having moved the measurement coordinate Z for a distance of the reference coordinate Z from the design-based floor board upper surface height based on the camber reference measurement table 322 as reference, and the camber system is corrected, before the ideal upper surface of floor board is computed.

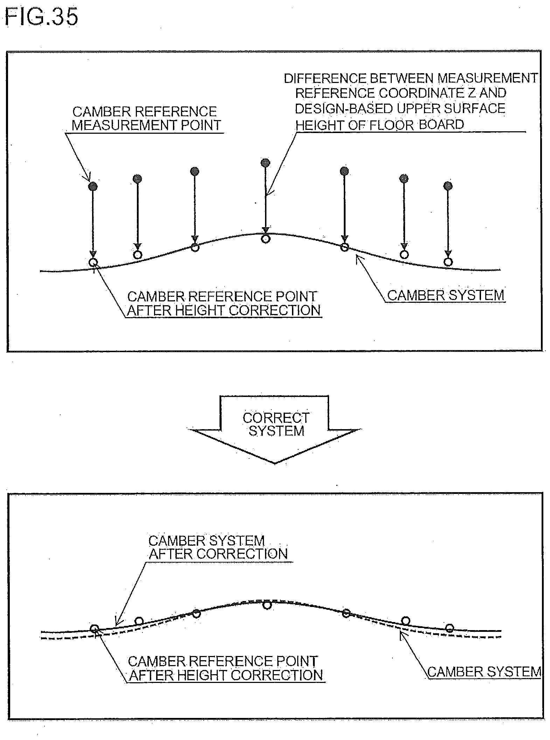

FIG. 35 is a view illustrating a camber system correction based on the measurement result of the camber reference according to the third embodiment. The camber reference point after height correction is computed by correcting the difference between the measurement reference coordinate Z of the camber reference measurement point and the design-based floor board upper surface height. For example, the polynomial coefficient defining the camber is acquired based on the camber reference point after height correction and the camber system using a least squares method and the like, and the camber system is corrected.

The process that the fitting adjustment amount calculation processing unit 104 according to the third embodiment executes after step S103 is similar to the process flow after step S104 of the second embodiment.

As described above, according to the third embodiment, a process of computing the amount of adjustment of floor height corresponding to the actual vehicle body structure is enabled by using the camber reference measurement result when computing the ideal upper surface of floor board.

<Fourth Embodiment>

In contrast to the second embodiment, a fourth embodiment is an embodiment including a process of additionally reflecting the measurement result information as reference for surface matching. That is, the present embodiment corresponds to (type 2), which is an example of a case where (A2) a measurement result information of the non-adjustment portion is necessary, and (B) a measurement result information of the fitting is not necessary.

When there are areas where surface matching must be performed with the upper surface of the floor board, such as a lower surface of the opening for doors or a lower surface of the opening for end gangways, surface matching must be performed by adjusting the floor board side, if the target surface does not have an adjusting allowance.

According to the fourth embodiment, if there is no design-based adjusting allowance at the target side surface subjected to surface matching with the floor board upper surface, such as the lower surfaces of the openings for doors or the lower surfaces of the openings for end gangways, the surface height of the target surface side is measured through three-dimensional measurement and set as reference of surface matching, and the ideal upper surface of floor board is computed based on the measurement result.

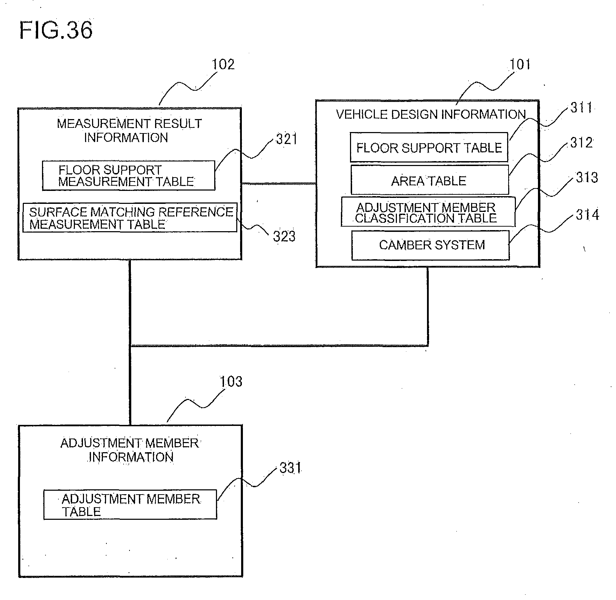

FIG. 36 is a view illustrating the relationship of input/output information regarding the fourth embodiment. With respect to the second embodiment, a surface matching reference measurement table 323 is added to the measurement result information 102. That is, the measurement data stored in the surface matching reference measurement table 323 corresponds to the measurement result information of the non-adjustment portion.

Although not illustrated, according to the fourth embodiment, similar to the third embodiment, an option is added to use the surface matching reference measurement result as an item of the "selection of ideal upper surface of floor board" column in the input screen of the input/output unit 121.

The fitting adjustment amount calculation processing unit 104 receives input of the selection of the ideal upper surface of floor board in step S102 of the flowchart of FIG. 16, similar to the second embodiment. In the fourth embodiment, the surface matching reference measurement result is selected to be used.

In step S103, the fitting adjustment amount calculation processing unit 104 computes the ideal upper surface of floor board based on the option selected in step S102. At this time, the surface matching reference measurement result added in the fourth embodiment is used to compute the ideal upper surface of floor board, by correcting the camber system so that the surface matching reference position measured by the camber system is passed without fail.

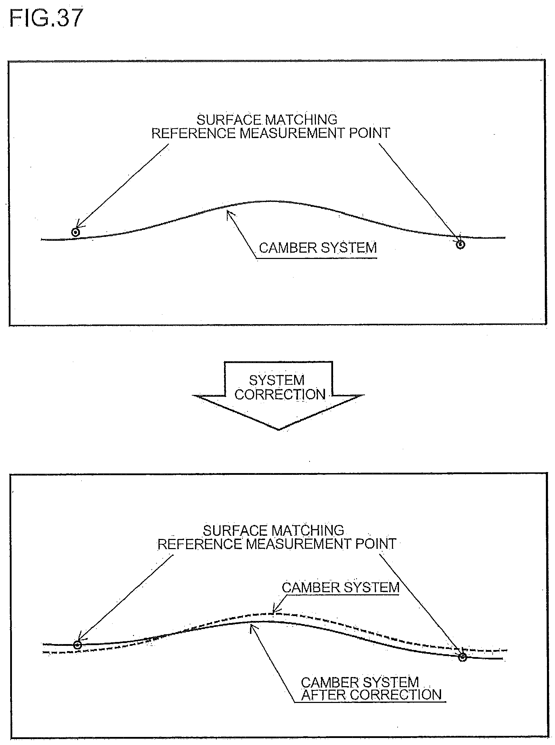

FIG. 37 is a view illustrating a correction of camber system based on the measurement result of surface matching reference according to the fourth embodiment. As shown in FIG. 37, the camber system is corrected so that the two measured surface matching reference points are positioned on the camber system after correction.

The process that the floor height adjustment amount calculation processing unit 104 according to the fourth embodiment executes in step S102 and thereafter is similar to the process flow of step S104 and thereafter according to the second embodiment.

As described, according to the fourth embodiment, the process for computing the amount of adjustment of floor height in accordance with the actual fabrication of the vehicle body structure is enabled through use of the result of measurement of the surface matching reference in computing the ideal upper surface of floor board.

Further, instead of the method of correcting the whole camber system illustrated in FIG. 37, a method of correcting the camber system of only the vicinity area of the surfaced matching position can be adopted, such as correcting the camber system from the end surface of the underframe to the area between body bolsters, in a case where the surface matching position is close to the end surface of the underframe, for example.

Further, a method of correcting the camber system in addition to the camber reference measurement result according to the third embodiment can also be adopted.

<Embodiment 5>

A fifth embodiment is a fitting installation instruction method of installing a front side window glass, as an example of a case corresponding to (type 3) where (A2) the measurement result information of non-adjustment portion is necessary and (B) the measurement result information of fitting is necessary.

In the following description, unless stated otherwise, the "floor support" described in the aforementioned second and third embodiments can be read as "fitting support" or "fitting" to enable the description to be applied to fittings in general. The fifth embodiment illustrates an example where the "fitting" is a "front side window glass". The configuration of the apparatus is similar to FIG. 4 of the second embodiment. One example of the flow related to processing and input/output is similar to FIG. 5.

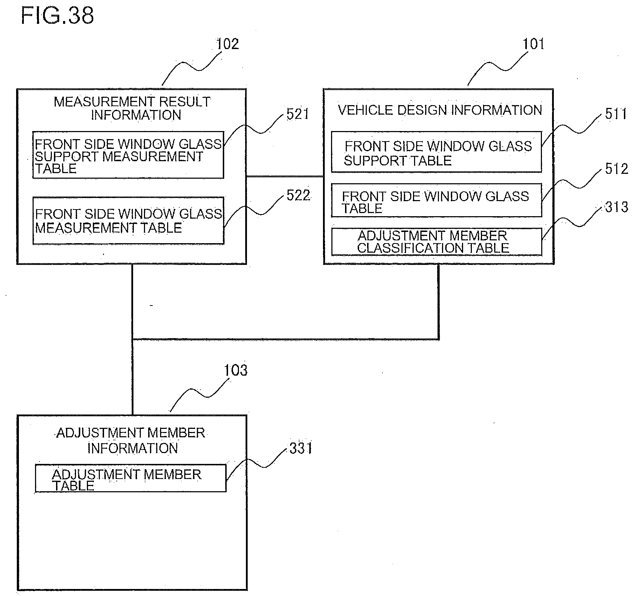

FIG. 38 is an example illustrating the relationship of input/output information related to the fifth embodiment. The difference of the present information from FIG. 6 of the second embodiment is that the vehicle design information 101 includes a front side window glass support table 511 and a front side window glass table 512. Further, the measurement result information 102 includes a front side window glass support measurement table 521 and a front side window glass measurement table 522. In other words, the measurement data stored in the front side window glass measurement table 522 corresponds to the measurement result information of fitting.

The front side window glass support table 511 and the front side window glass table 512 have equivalent data fields as the floor support table 311 of FIG. 7 corresponding to the second embodiment, and the front side window glass support measurement table 521 and front side window glass measurement table 522 have equivalent data fields as the floor support measurement table 321.

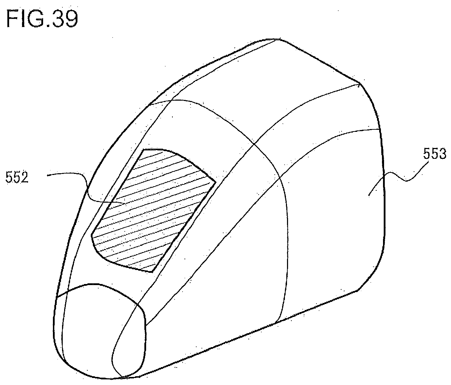

FIG. 39 is a view illustrating a configuration of a leading body structure 553 and a front side window glass 552 of the railway vehicle.

FIG. 39 illustrates a leading body structure having a streamline shape, but the vehicle can also be a commuter train where the leading section is perpendicular and the front side window glass covers the front side of the leading body structure, or a high-speed vehicle having a sharper streamline shape with a greater front side window glass curvature.

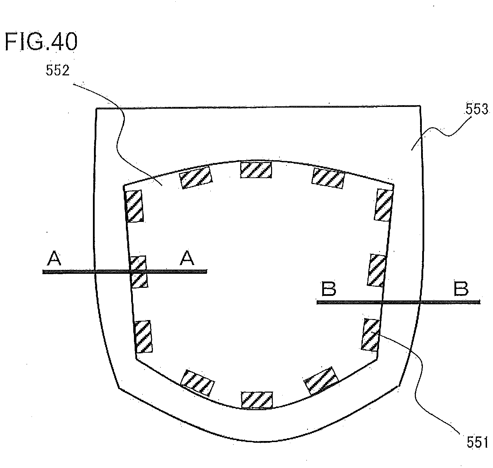

FIG. 40 is a frame format illustrating FIG. 39 from directly above, with the elements not required for description omitted. Adjustment members 551 illustrated as shaded portions in the drawing are arranged in a sandwiched manner between the front side window glass 552 and the leading body structure 553, wherein the front side window glass 552 is supported by a plurality of adjustment members 551. The portions where adjustment members are allocated on the leading body structure side is called a "front side window glass support portion". The shape of the leading body structure and the front side window glass or the size and arrangement of the adjustment members are not restricted to the example illustrated in FIG. 40.

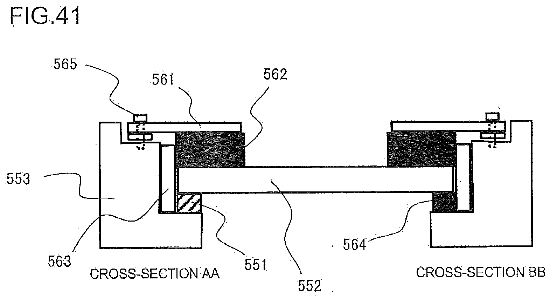

FIG. 41 is a view illustrating cross-section AA and cross-section BB of FIG. 40.

Cross-section AA is an example of a cross-section having the adjustment member, and cross-section BB is an example of a cross-section without the adjustment member.

In cross-section AA, the adjustment member 551 is arranged at the front side window glass support portion of the leading body structure 553, and the front side window glass 552 is arranged above the adjustment member.

The cross-section BB does not correspond to the front side window glass support portion, so that a seal member 564 is filled instead of the adjustment member 551, with the front side window glass 552 arranged thereon. A packing 563 is arranged in the side direction to ensure airtightness. A seal member 562 is filled above the front side window glass 552, and the glass is fixed by a glass holding member 561. The glass holding member 561 is fixed to the leading body structure 553 via a screw 565 and the like. An uppermost surface of the leading body structure 553 and an upper surface of the glass holding member 561 are subjected to surface matching.

Other configurations can also be adopted, such as a configuration where the center section of the front side window glass has a stepped portion whose upper surface is subjected to surface matching with the glass holding member, a configuration where the glass holding member is arranged above the body structure frame, a configuration where a seal member is filled instead of the packing, or a structure where a seal member is filled instead of the packing, or a configuration where the packing is arranged instead of the seal member. An allowable minimum thickness of the seal member is defined in the vehicle design information 101, so as to ensure the airtightness of the leading body structure.

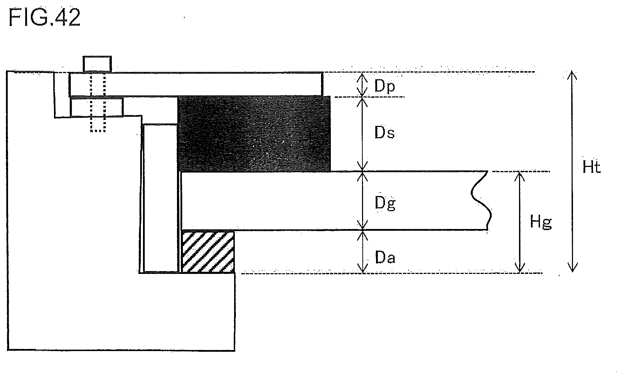

FIG. 42 is an enlarged view of cross-section AA. The front side window glass 552 has a curved shape, so that the respective cross-sections are defined as a normal line direction of the curved surface.

A height (Ht) of an uppermost surface from a reference plane (such as an upper surface of a front side window glass support portion of the leading body structure 553 having an equivalent curvature as the front side window glass 552) is recognized to be equal to a sum of an adjustment member thickness (Da), a front side window glass thickness (Dg), a seal member thickness (Ds) and a glass holding member thickness (Dp). This is expressed below as expression 6.

$$Ht = Da + Dg + Ds + Dp \quad \ldots \quad \text{(Expression 6)}$$

The uppermost surface height (Ht) from the reference plane corresponds to the stepped portion of the leading body structure in the range illustrated in FIG. 42, which is molded by machining or the like, so that the manufacture accuracy is sufficiently high.

The glass holding member 561 is formed of a metallic or resin plate, so that the manufacture accuracy of the glass holding member thickness (Dp) is sufficiently high.

The deformation amount of the front side window glass thickness (Dg) from the design value is sufficiently small. However, the shape deformation of the whole front side window glass is of a level that cannot be ignored during adjustment, and it must be taken into consideration that the adjustment amounts of the respective adjustment portions mutually influence the position of the front side window glass 552. An actual height of the front side window glass from the reference plane in the respective adjustment portions is referred to as (Hg (i)'). Here, the suffix (i) indicates a position of the adjustment portion.

The adjustment member thickness (Da) and the seal member thickness (Ds) have adjustment margins, so that the actual values thereof are referred to as (Da') and (Ds'), respectively. Based on the above, the following expression 7 holds true.

$$Ht = Da' + Dg + Ds' + Dp \quad \ldots \quad \text{(Expression 7)}$$

Since (Ht), (Dg) and (DP) are fixed in the respective adjustment portions (i), expression 8 holds true in the respective adjustment portions.

$$Da (i)' + Ds (i)' = \text{Const.} \quad \ldots \quad \text{(Expression 8)}$$

Further, based on the relationship between the actual front side window glass height (Hg (i)'), the actual adjustment member thickness (Da (i)') and the front side window glass thickness (Dg), the following expression 9 holds true.

$$Da\ (i)' = Hg\ (i)' - Dg \qquad \dots \qquad (\text{Expression } 9)$$

The actual adjustment member thickness (Da') is computed based on expression 9, but the thickness must satisfy the restriction of the adjustment member thickness (restriction condition B1).

Further, the actual seal member thickness (Ds') is computed based on expression 8, but the thickness must satisfy the restriction of the seal member thickness (restriction condition B2).

The measurement of the front side window glass support portion and the front side window glass 552 can be performed through three-dimensional measurement using a laser tracker or a laser scanner, or a simple method using an analog measurer or a laser level, similar to the method described in the second embodiment mentioned earlier. Another optional method involves creating a jig accurately reproducing the shape of the front side window glass 552, and substituting the difference between the jig at the adjustment portion as the measurement value. This means is one of the effective means for cutting down the number of measurement steps in the front side window glass, having a smaller measurement range compared to the floor board.

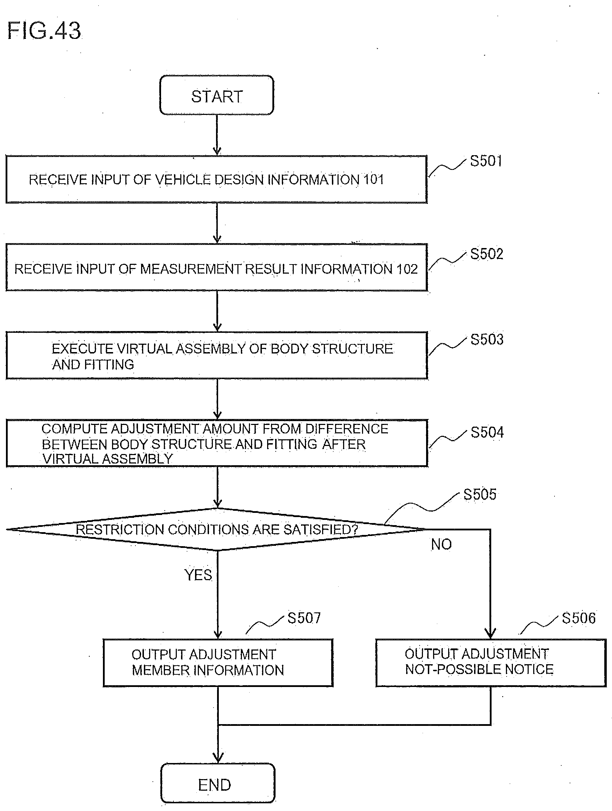

FIG. 43 illustrates one example of a flowchart related to a front side window glass adjustment amount computation processing performed by the fitting adjustment amount computation processing unit 104 of the fitting installation instruction apparatus 111.

The operation based on the flowchart of FIG. 43 will be described below.

In step S501, the fitting adjustment amount computation processing unit 104 receives necessary vehicle design information 101 from the memory 123 as input data. Regarding the input, the selection of a target vehicle is required. The vehicle design information 101 includes a data table of the leading body structure including the front side window glass support portion, and the front side window glass, various restriction conditions, a 3D-CAD data, adjustment member data table, and so on. The 3D-CAD data is read in a state where the front side window glass and the leading body structure are arranged at a design-based final assembly position (hereinafter referred to as design position) with respect to a common coordinate system.

In step S502, the fitting adjustment amount computation processing unit 104 receives necessary measurement result information 102 from the memory 123 as input data. The measurement result information 102 includes a point group data having measured the leading body structure and the front side window glass, a data table having extracted the necessary regions, and so on.

In step S503, virtual assembly of the leading body structure and the front side window glass is performed based on the vehicle design information 101 and the measurement result information 102 having received the input, and an ideal position after adjustment of the front side window glass is computed.

Now, at least the following three methods can be selected as the virtual assembly processing method. The selection can be reflected, for example, by a method of allowing entry through a user screen, a method of retaining an initial setting, and so on.

(Virtual assembly A) involves a method of performing a best-fit of measurement data of the leading body structure and the front side window glass to a 3D-CAD, respectively. Best-fit refers to determining the position of a point group data so that a total sum of distances between comparison target data becomes minimum using a least squares method. It is also possible to perform weighting of a coefficient of the least squares method. When there is a difference in data quantity depending on the measurement position, or when there is a movement direction that should be prioritized, virtual assembly reflecting the design intent is enabled by changing the weighting.

The advantage of this method is that the errors of both the leading body structure and the front side window glass from the ideal position (i.e., design position) are minimized. Further, as for advantage of computation, best-fit of the 3D-CAM and the measurement data is performed, so that time required for the computation is short, and the possibility of convergence of best-hit is high compared to the best-hit of point group data and point group data.

The drawback of this method is that the relationship of the respective shapes is not considered, and that the gap (in other words, the adjustment amount) may be significant.

(Virtual assembly B) involves a method of performing best-hit of measurement data of the leading body structure and the front side window glass. Measurement data can be mutually directly subjected to best-hit, but the measurement data can also be subjected to best-hit after processing either one of or both the measurement data to a mesh, a polygon or a 3D-CAD.

The advantage of this method is that the relationship between the mutual shapes is considered, and the gap can be minimized.

The drawback of this method is that the design position is not considered, and the deviation from the design position may be significant. Further, in order to perform best-fit of the mutual measurement data, if the measurement data density is uneven, or a portion that can be compared with the mutual measurement data (in other words, the portion that comes into contact with the glass and the frame via a liner or a seal member when arranged at the design-based positional relationship) is not measured, best-fit may not be converged. Moreover, if the coordinate systems of the measurement data do not correspond, the comparison portions cannot be selected appropriately, and best-fit may not be converged.

(Virtual assembly C) involves a method of combining (virtual assembly A) and (virtual assembly B).

The advantage of this method is that the possibility of having the best-fit converged by (virtual assembly B) can be increased by matching positions using (virtual assembly A) in advance. The drawback of (virtual assembly B) can be compensated by the method of (virtual assembly A).

The drawback of this method is that processing steps are increased.

In step S504, a difference is extracted based on the positional relationship of the fitting and the body structure computed in step S503 based on expression 9, and the adjustment member thickness (Da') adjusting the difference is determined based on the adjustment member information included in the vehicle design information 101 having received the input.

Now, the adjustment member thicknesses (Da (i)') of each adjustment portion can be sequentially computed, similarly as steps S104 through S116 in the flowchart illustrated in FIG. 16 of the second embodiment described earlier.

If the length or the width of the adjustment member is small, or if division of the adjustment member is not permissible from the viewpoint of manufacture, the adjustment amount can be computed from a representative measurement point of each adjustment portion.

In step S505, evaluation is performed on whether the computed adjustment amount satisfies a restriction condition of the vehicle design information 101 having received the input.

Here, at least the following two conditions are included as the restriction condition.

(Restriction condition B1) involves satisfying an upper limit value and a lower limit value of the adjustment member thickness, similar to step S114 of the flowchart illustrated in FIG. 16 of the second embodiment described earlier.

(Restriction condition B2) involves satisfying an upper limit value and a lower limit value of the seal member thickness, based on a relationship that a sum of the adjustment member thickness (Da(i)') and the seal member thickness (Ds(i)') based on expression 8 is fixed.

If the above-mentioned restriction conditions are satisfied (YES), the procedure advances to step S507. If the above-mentioned restriction conditions are not satisfied (NO), the procedure advances to step S506.

In step S506, the adjustment not-possible notice 203 is output. The user confirms the output result, and performs the following selections. A plurality of these selections can be combined.

(Selection A) involves changing the input of step S501, and re-executing the processing. The changing method can be a method of changing (relieving) the various restriction conditions included in the vehicle design information 101, or performing re-measurement and updating the measurement result information 102.

(Selection B) involves changing (re-selecting) the method for processing the virtual assembly of step S503, and re-executing the processing.

(Selection C) involves judging that adjustment is not possible based on the quality of the current body structure (which is the leading body structure according to the fifth embodiment) or the fitting (which is the front side window glass according to the fifth embodiment), and making arrangements to perform shape correction and the like. After shape correction, re-measurement and execution of processing can be performed again.

In step S507, the adjustment member fabrication instruction 201 enabling advance preparation of fabrication of the adjustment member and the adjustment member arrangement instruction 202 enabling fitting installation instruction based on the computed adjustment amount are output.

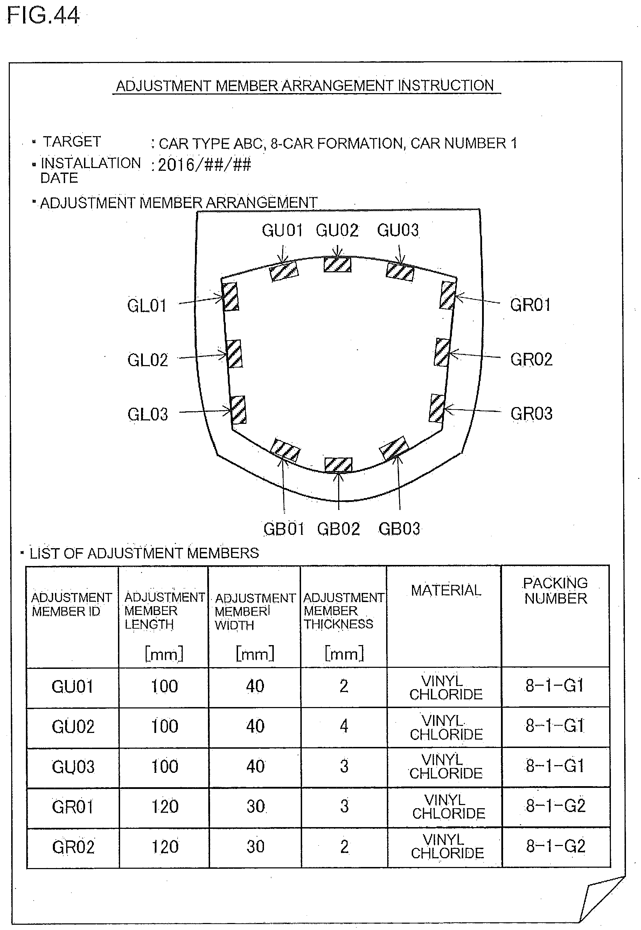

FIG. 44 illustrates one example of the adjustment member arrangement instruction 202 in installing the front side window glass.

According to the subsequent step of the front side window glass installation, after the adjustment member is fabricated based on the adjustment member fabrication instruction 201, the installation operation of the front side window glass is performed by arranging the adjustment member and performing adjustment of position of the front side window glass, according to the adjustment member arrangement instruction 202 (FIG. 44).

According to the fifth embodiment, the adjustment amount can be computed prior to installation, even if the fitting such as the front side window glass is deformed.

<Sixth Embodiment>

A sixth embodiment relates to a fitting installation instruction method during installation of a driver's cab, illustrated as an example of a case corresponding to (type 4) where (A2) the measurement result information of non-adjustment portion is required, and (B) the measurement result information of fitting is also required.

In the sixth embodiment, an example is illustrated where the "fitting" of the first to third embodiments described earlier are reread as a "driver's cab".

The device configuration is similar to FIG. 4 illustrating the second embodiment. An example of the flow related to the processes and input/output are similar to FIG. 5.

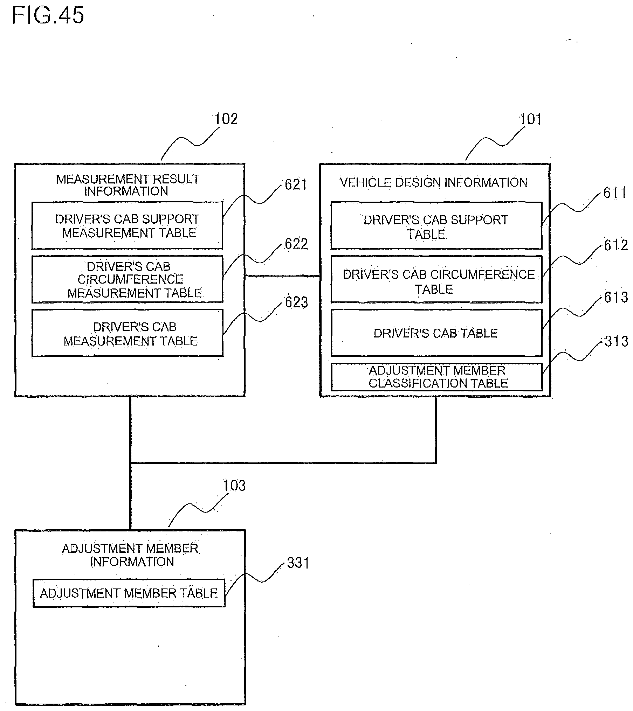

FIG. 45 is a view illustrating a relationship of input/output information related to the sixth embodiment. As the differences between FIG. 6 of the second embodiment, the vehicle design information 101 includes a driver's cab support table 611, a driver's cab circumference table 612 and a driver's cab table 613. Further, the measurement result information 102 includes a driver's cab support measurement table 621, a driver's cab circumference measurement table 622 and a driver's cab measurement table 623. That is, measurement data stored in the driver's cab circumference measurement table 622 corresponds to the measurement result information of the non-adjustment portion, and the measurement data stored in the driver's cab measurement table 623 corresponds to the measurement result information of the fitting.

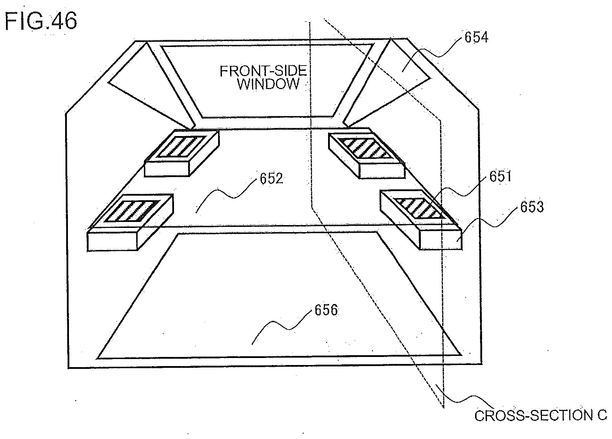

FIG. 46 is a view illustrating a structure of an inner side of the leading body structure and the driver's cab of the railway vehicle.

A plurality of driver's cab supports (mounting seats) 653 are disposed on a side surface of the inner side of the leading body structure, and a driver's cab 652 is arranged on the upper portion of the supports (only a bottom side of the cab is illustrated in the drawing). The driver's cab 652 is a welded structure, and after the cab is welded, it is carried to the inner side of the leading body structure, and the position of the cab is adjusted by the driver's cab support 653 and the cab is fastened via bolts and the like. Electric equipments such as control panels are arranged on an inner side of the driver's cab 652. The surface of the driver's cab 652 can be covered by resin panels. It is also possible to adopt a configuration where the driver's cab supports 653 are disposed on the front side of the leading body structure or on an upper surface (floor) 656 of the underframe, instead of on the side surfaces of the leading body structure. A lower portion equipment 655 such as a manufacturing device is arranged on a lower portion of the driver's cab 652 (not shown in FIG. 46). The arrangement or the number of the driver's cab supports 653 or other structures are not restricted to the example of FIG. 46.

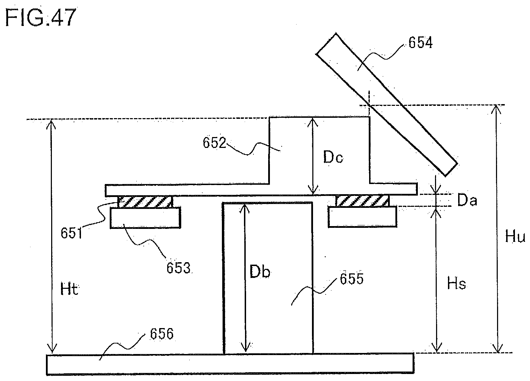

FIG. 47 is a drawing illustrating cross-section C of FIG. 46. An adjustment member 651 illustrated as the shaded portion in the drawing is arranged in a manner sandwiched between the driver's cab 652 and the driver's cab support 653, and it can be recognized that the driver's cab 652 is supported by a plurality of adjustment members 651.

The upper surface of the driver's cab 652 must be prevented from interfering with the inner side of the leading body structure, and especially, the interference with a leading body structure pillar 654 must be considered (restriction condition C1).

Further, a lower surface of the driver's cab 652 must consider interference with the lower portion equipments 655 arranged on an upper surface of the underframe 656 (restriction condition C2).

It can be recognized that the uppermost surface height (Ht) of the driver's cab 652 from the reference plane (such as the upper surface of the underframe 656) is equal to a sum of a height (Hs) of the driver's cab support 653 from the reference plane, a thickness (Da) of the adjustment member 651, and a thickness (Dc) of the driver's cab 652. This is expressed below as expression 10.

$$Ht = Hs + Da + Dc \quad \ldots \quad \text{(Expression 10)}$$

The driver's cab support 653 constitutes a part of the leading body structure being a welded structure, so that it is subjected to welding deformation. The actual height of the driver's cab support 653 is referred to as (Hs'). The driver's cab 652 itself is also a welded structure, so that the actual thickness of the driver's cab 652 is referred to as (Dc'). When fabrication is performed by setting the lower surface of the driver's cab 652 as the reference, the fluctuation of thickness of the driver's cab 652 is exposed as the fluctuation of the upper surface of the driver's cab 652. The thickness of the adjustment member 651 and the uppermost surface height of the driver's cab 652 fluctuates according to the content of adjustment, so that the actual thickness of the adjustment member 651 is defined as (Da'), and the actual uppermost surface height of the driver's cab 652 is defined as (Ht'). Therefore, the following expression 11 holds true.

$$Ht' = Hs' + Da' + Dc' \quad \ldots \quad \text{(Expression 11)}.$$

The leading body structure pillar 654 constitutes a part of the leading body structure being a welded structure, so that if the actual height of the leading body structure pillar 654 is referred to as (Hu'), the following expression 12 holds true based on restriction condition 10.

$$Ht' < Hu' \quad \ldots \quad \text{(Expression 12)}.$$

The lower portion equipment 655 is a delicate equipment, and there is no significant error between the design thickness (Db) and the actual thickness. The following expression 13 holds true based on restriction condition expression 11.

$$Db < Hs' + Da' \quad \dots \quad \text{(Expression 13)}$$

Focusing on the perpendicular-direction height of the respective adjustment portions (i), the actual thickness (Da') of the adjustment member 651 satisfies the following expressions 14, 15 and 16, based on expressions 10 through 13.

$$Da\ (i)' = Ht\ (i)' - Hs\ (i)' - Dc\ (i)' \quad \dots \quad \text{(Expression 14)}$$

$$Da\ (i)' < Hu\ (i)' - Dc\ (i)' - Hs\ (i)' \quad \dots \quad \text{(Expression 15)}$$

$$Db - Hs\ (i)' < Da\ (i)' \quad \dots \quad \text{(Expression 16)}$$

Especially, the leading body structure pillar 654 often adopts a slanted structure, and it should be kept in mind that Hu (i)' is a perpendicular-direction height of the adjustment portion (i).

The measurement of the driver's cab 652, the driver's cab support 653 and the leading body structure pillar 654 can be performed by selecting a three-dimensional measurement using a laser tracker, a laser scanner and the like, or a simple method using an analog measurer or a laser level, similar to the method described in the second embodiment described earlier. If the fluctuation of perpendicular-direction height caused by displacement in the horizontal direction is significant, such as in the case of the leading body structure pillar 654, it is an effective means to acquire a large-scale points group using a three-dimensional scanner and the like and retain the information as information approximating a plane, in order to eliminate erroneous measurement or erroneous determination.

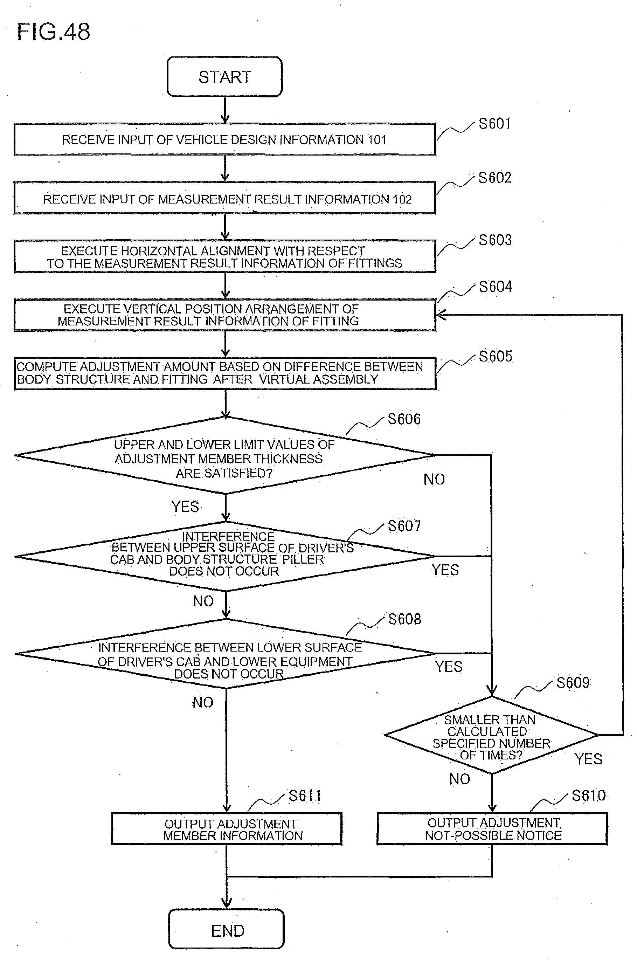

FIG. 48 is an example of a flowchart related to the driver's cab adjustment amount computation processing by the fitting adjustment amount computation processing unit 104 of the fitting installation instruction apparatus 111.

The operation based on the flowchart of FIG. 48 will be described below.

In step S601, the fitting adjustment amount computation processing unit 10 receives necessary vehicle design information as input data from the memory 123. During this input, the selection of the target vehicle becomes necessary. The vehicle design information 101 includes a data table of the leading body structure including the driver's cab support and the leading body structure pillar and the driver's cab, various restriction conditions, 3D-CAD data, data table of the adjustment members, and so on. The 3D-CAD data is read in a state where the driver's cab and the leading body structure are maintained in a state positioned at the design position with respect to a common coordinate system.

In step S602, the fitting adjustment amount computation processing unit 104 receives necessary measurement result information 102 as input data from the memory 123. The measurement result information 102 includes a point group data having measured the leading body structure and the driver's cab.

In step S603, the horizontal alignment of the driver's cab is performed based on the vehicle design information 101 and the measurement result information 102 having received the input. The driver's cab is a portion where important equipments used by a driver for operating the vehicle are arranged, and it should preferably be horizontal with respect to the reference plane. A lower end of the driver's cab or the upper surface of the driver's cab can be used as a horizontal reference. A coordinate system in a horizontal direction is computed by performing appropriate rotation of the coordinate axis and the like based on the measurement result information of the driver's cab, and the coordinate of the measurement result information of the driver's cab is transformed.

In step S604, position adjustment in the perpendicular direction is performed of the measurement result information of the driver's cab having been subjected to the coordinate transformation. The adjustment in the perpendicular direction included in the vehicle design information of the driver's cab is performed as an initial value of position adjustment.

The processes of steps S603 and S604 can also be achieved by performing best-fit of the measurement data of the driver's cab to the 3D-CAD data of the driver's cab according to the order of priority in the horizontal or perpendicular direction, for example.

In step S605, a difference is extracted based on the positional relationship of the body structure and fitting computed in step S604 based on expression 14, and the adjustment member thickness (Da') adjusting the difference is determined based on the adjustment member information included in the vehicle design information 101 having received the input.

Now, the adjustment member thicknesses (Da (i)') of the respective adjustment portions are sequentially computed, similar to steps S104 to S116 of FIG. 16 illustrating the flowchart of the second embodiment described earlier.

If the length and width of the adjustment member is small, or if division of the adjustment member is not permissible from the viewpoint of fabrication, the adjustment amount can be computed uniquely based on the representative measurement points of the respective adjustment portions.

Whether the computed adjustment amount satisfies the restriction condition included in the vehicle design information 101 having received the input is evaluated in steps S606 through S608.

In step S606, whether the thickness of the adjustment member satisfies the upper and lower limit values is determined, similar to step S114 of FIG. 16 illustrating the flowchart of the second embodiment. If the upper or lower limit value is not satisfied (NO), the procedure returns to step S604, where the position is adjusted downward in the perpendicular direction when the upper limit value is exceeded, and adjusted upward in the perpendicular direction when the lower limit value is exceeded.

In step S607, whether interference occurs between the upper surface of the driver's cab and the body structure pillar is determined based on expression 15. If interference occurs (YES), the procedure returns to step S604, and the position is adjusted in the lower perpendicular direction.

In step S608, whether interference occurs between the lower surface of the driver's cab and the lower equipment is determined based on expression 16. If interference occurs (YES), the procedure returns to step S604, and the position is adjusted in the upper perpendicular direction.

The adjustment amount in step S604 based on steps S606 through S608 is based on the adjustment member thickness pitch included in the adjustment member information.

Further, whether the number of repeated computation is equal to or smaller than a specified number retained as initial setting is determined in step S609. If the number is equal to or smaller than a specified number (YES), re-computation is executed by returning to step S604. If the number is greater than the specified number (NO), it is determined that computation will not be converged, and the procedure advances to step S610.

When computation is converged (step S608 "YES"), the procedure advances from step S608 to step S611. The processes of steps S606 to S608 can be consolidated into a single processing step. Further, the evaluation criteria can be added, changed or deleted according to the characteristics of the process.

In step S610, an adjustment not-possible notice A33 is output. The user confirms the result of output, and performs the following selection. These selections can also be combined.

(Selection A) involves changing the input of step S601, and re-executing the processing. The changing method can be a method of changing (relieving) the various restriction conditions included in the vehicle design information 101, or performing re-measurement and updating the measurement result information 102.

(Selection B) involves judging that adjustment is not possible depending on the quality of the current body structure (which is the driver's cab support or the leading body structure pillar in the present embodiment) or the fitting (which is the driver's cab in the present embodiment), and making arrangement to perform shape correction and the like. After correcting the shape, re-measurement and processing can be performed again.

In step S611, the adjustment member fabrication instruction 201 enabling advance preparation of fabrication of adjustment members and the adjustment member arrangement instruction 202 enabling fitting installation instruction based on the computed adjustment amount are output.

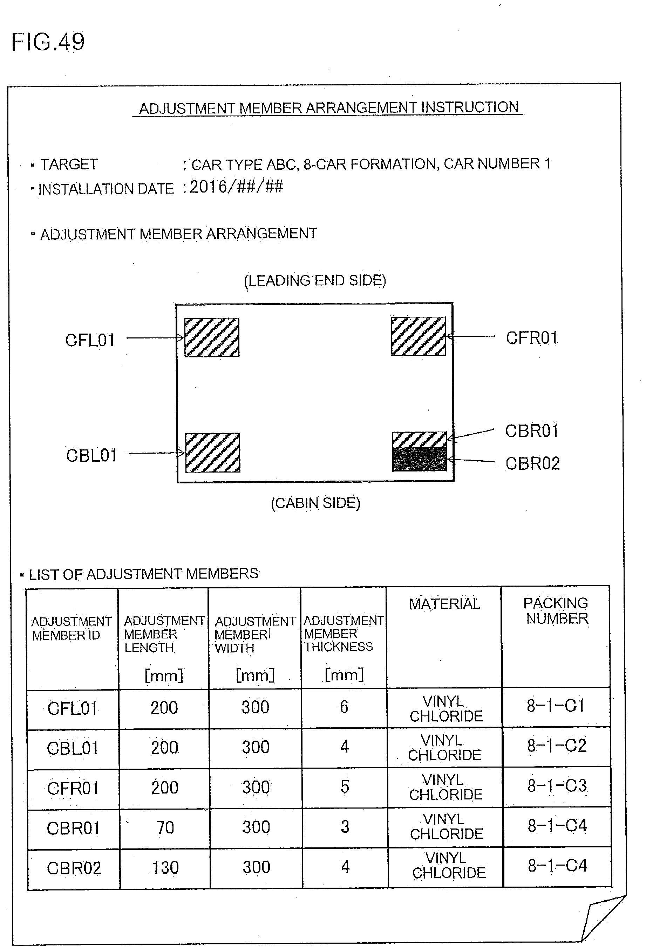

FIG. 49 illustrates one example of the adjustment member arrangement instruction 202 during installation of the driver's cab.

A subsequent step in the installation of the driver's cab involves fabricating an adjustment member based on the adjustment member fabrication instruction 201. In this step, the adjustment member is arranged according to the adjustment member arrangement instruction 202 (FIG. 49), and position adjustment of the driver's cab is performed, to realize installation operation of the driver's cab.

According to the sixth embodiment, not only the relationship between the driver's cab and the driver's cab support but also the adjustment amount taking into consideration the interference between the leading body structure pillar or between the lower equipments prior to installation can be computed.

<Seventh Embodiment>

A seventh embodiment is an embodiment facilitating fabrication of the adjustment member by computing a combination of the thicknesses of the adjustment members when fabricating adjustment members. Therefore, the embodiment is applicable to adjustment members acquired in the aforementioned respective embodiments.

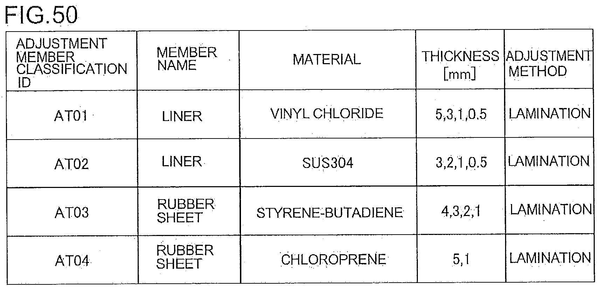

FIG. 50 shows a data example of the adjustment member classification table 313 according to the seventh embodiment. A field of the thickness of the respective adjustment members is added to the adjustment member classification table 313 (FIG. 14) of the second embodiment, and a plurality of options are provided regarding the thickness.

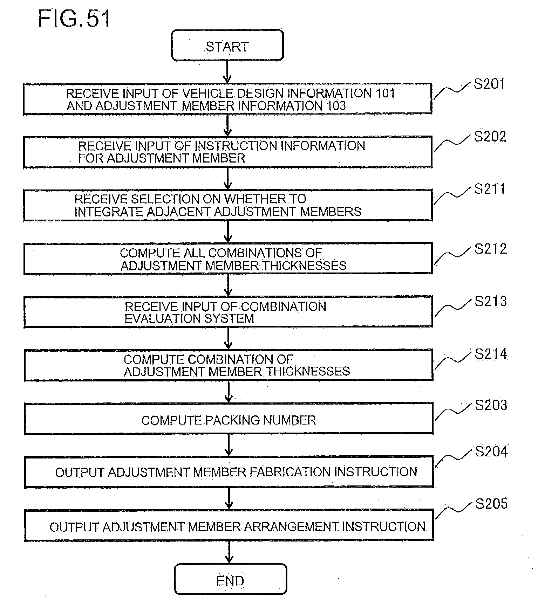

FIG. 51 shows an example of the flowchart of the process in which the adjustment member instruction generation processing unit 105 according to the seventh embodiment outputs the adjustment member fabrication instruction 201 and the the adjustment member arrangement instruction 202. Four steps (steps S211 through S214) are added between steps S202 and S203 of the first embodiment.

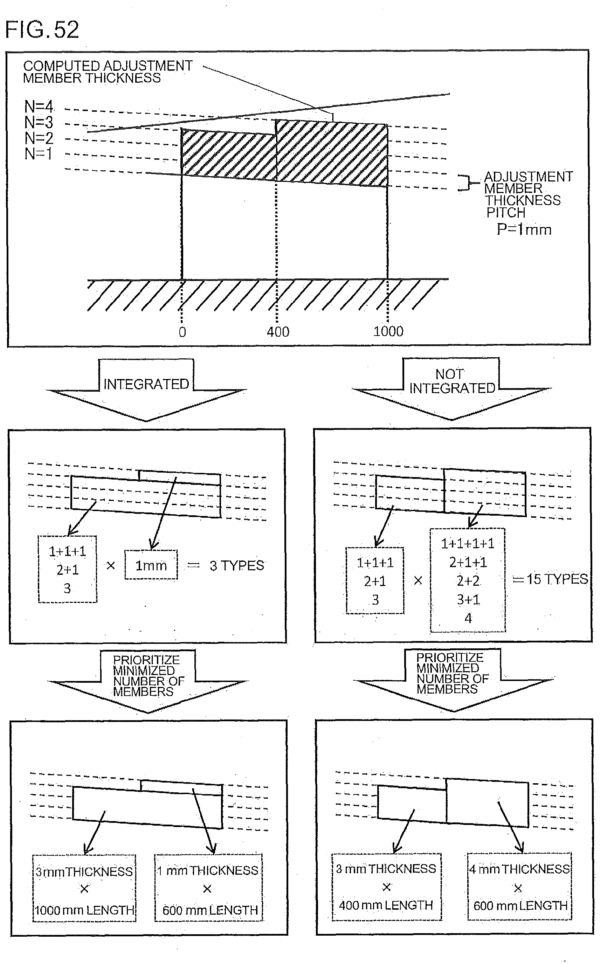

FIG. 52 is a view illustrating a combination of the adjustment member thicknesses according to the seventh embodiment.

Now, the contents of the processes of four steps (steps S211 through S214) added to FIG. 51 will be described with reference to FIG. 52.

In step S211, the adjustment member instruction generation processing unit 105 receives entry of an instruction on whether to integrate the adjacent adjustment members. The selection of input of instruction should be entered through the input screen of the input/output unit 121, for example.

In step S212, the adjustment member instruction generation processing unit 105 computes all combinations of the adjustment member thicknesses. For example, in the example of FIG. 52, if there are four types of thickness options, such as 1, 2, 3 and 4 mm, a combination of three types are computed when integrating the adjustment members and 15 types are computed when the adjustment members are not integrated.

In step S213, the adjustment member instruction generation processing unit 105 receives input of a combination evaluation system. The combination evaluation system refers to an evaluation system determining a superiority of the combination of the adjustment members being used. For example, the system evaluates whether to minimize the types of thicknesses of the adjustment members being used, to use adjustment members having a greater thickness as possible, to minimize the number of adjustment members being used, and so on. Evaluation can also be performed in multiple stages, such as by weighting evaluation items, or assigning priority orders to the evaluation items. The input screen of the input/output unit 121 can be used, for example, to enter the evaluation system.

In step S214, the adjustment member instruction generation processing unit 105 computes the combination of adjustment member thicknesses based on the combination evaluation system received in step S213. For example, when the evaluation system prioritizes minimizing the number of members being used, as shown in FIG. 52, the combination of superposing a thickness of 1 mm to the overall thickness of 3 mm is computed if the adjustment members are integrated, and a combination of a thickness of 3 mm and a thickness of 4 mm separated by the difference in thicknesses is computed if the adjustment members are not integrated.

As described, the fourth embodiment has multiple options of adjustment member thicknesses, so that the effect of reducing the number of fabrication steps of the adjustment members can be exerted compared to laminating a large number of adjustment members having small thicknesses. Moreover, if integration is selected, multiple adjacent adjustment members are integrated with a fixed thickness, and an additional thickness is superposed, instead of fabricating different adjustment members for each section of different thicknesses, so that the effect of reducing the number of fabrication steps and the number of installation steps of the adjustment members can be exerted.

The present invention is not restricted to the above-illustrated embodiments, and can include various modifications. The above-illustrated embodiments are described in detail to help understand the present invention, and the present invention is not necessarily restricted to a structure including all the components illustrated above. Further, a portion of the configuration of an embodiment can be replaced with the configuration of another embodiment, or the configuration of a certain embodiment can be added to the configuration of another embodiment. Moreover, a portion of the configuration of each embodiment can be added to, deleted from or replaced with other configurations.

A portion or all of the above-illustrated configurations, functions, processing units, processing means and so on can be realized via hardware configuration, such as by designing an integrated circuit. Further, the configurations and functions illustrated above can be realized via software by the processor interpreting and executing programs realizing the respective functions. The information such as the programs, tables and files for realizing the respective functions can be stored in a storage device, such as a memory, a hard disk or an SSD (Solid State Drive), or in a memory media, such as an IC card, an SD card or a DVD.

Only the control lines and information lines considered necessary for description are illustrated in the drawings, and not necessarily all the control lines and information lines required for production are illustrated. In actual application, it can be considered that almost all the components are mutually coupled.

## Claims

1. A method of manufacturing a railway vehicle comprising:

a first step of computing an ideal installation position of a fitting to be installed to a body structure (12), based on a vehicle design information (101) related to the body structure (12) and the fitting of the vehicle, and a first measurement result information (102) acquired by performing a three-dimensional measurement of an adjustment portion on the body structure (11) to which the fitting is installed;

a second step of outputting an instruction information instructing selection of an adjustment member (13) to be arranged at the adjustment portion and arrangement position, based on an adjustment amount of difference at the adjustment portion computed from the ideal installation position of the fitting computed in the first step and the first measurement result information (102), and an information of an adjustment member used for adjusting the difference when installing the fitting; and
a third step of installing the fitting based on the instruction information.

2. The method of manufacturing a railway vehicle according to claim 1, wherein
a measurement result information of a non-adjusted portion which is not a portion where the adjustment member (13) is arranged but is a portion that influences the arrangement of the fitting is set as a second measurement result information,
a measurement result information of the fitting is set as a third measurement result information, and
the first step computes the ideal installation position of the fitting to be installed to the body structure, based also on the second measurement result information or the third measurement result information in addition to the vehicle design information and the first measurement result information.

3. The method of manufacturing a railway vehicle according to claim 1, wherein
a measurement result information of a non-adjusted portion which is not a portion where the adjustment member (13) is arranged but is a position that influences the arrangement of the fitting is set as a second measurement result information,
a measurement result information of the fitting is set as a third measurement result information, and
the first step computes the ideal installation position of the fitting, while adjusting a vertical or horizontal position of the fitting to be arranged on the body structure, based also on the second and third measurement result information in addition to the vehicle design information and the first measurement result information.

4. The method of manufacturing a railway vehicle according to at least one of claims 1 through 3, wherein
the third step includes a fourth step of processing the adjustment member used for installation based on the instruction information, and a fifth step of installing the fitting using the adjustment member processed in the fourth step, and
the adjustment members used in the fifth step are prepared in advance in the fourth step.

5. The method of manufacturing a railway vehicle according to at least one of claims 1 through 4, wherein
the second step selects the adjustment member (13) for each section having divided the fitting, using a length and width information of the adjustment member (13) as the information of the adjustment member (13).

6. The method of manufacturing a railway vehicle according to any one of claims 1 through 5, wherein
the second step outputs a fabrication instruction and an arrangement instruction of the adjustment member (13) as the instruction information.

7. The method of manufacturing a railway vehicle according to claim 1 or at least one of claims 4 through 6, wherein
the fitting is a floor board,
in the first step, the first measurement result information includes a measurement information of an upper surface of a floor support disposed on an underframe of the vehicle, which is an adjustment portion on the body structure, and the ideal installation position is an ideal upper surface position of the floor board with respect to a target vehicle on which the floor board is installed,
in the second step, the adjustment amount of the difference is an adjustment amount of thickness at the upper surface of the floor support, and the instruction information is a selection and an installation position of the adjustment member (13) arranged on the upper surface of the floor support, and
in the third step, the floor board is installed.

8. The method of manufacturing a railway vehicle according to claim 7, wherein
the vehicle design information includes a camber system information defining a curvature regarding a camber, and
the camber system information is used to compute the ideal upper surface position of the floor board in the first step.

9. The method of manufacturing a railway vehicle according to claim 2 or at least one of claims 4 through 6, wherein
the fitting is a floor board,
in the first step, the vehicle design information includes a camber system information defining a curvature related to a camber, the first measurement result information includes a measurement information of an upper surface of a floor support disposed on an underframe of the vehicle, which is an adjustment portion on the body structure, the second measurement result information includes a measurement information other than the underframe (901) of the vehicle being a reference of the camber or a measurement information of a portion being a surface matching reference with respect to the upper surface of the floor board, and the ideal installation position is an ideal upper surface position of the floor board with respect to a target vehicle on which the floor board is installed,

in the second step, the adjustment amount of the difference is an adjustment amount of thickness at the upper surface of the floor support, and the instruction information is a selection and an installation position of the adjustment member arranged on the upper surface of the floor support, and

in the third step, the floor board is installed.

10. The method of manufacturing a railway vehicle according to claim 2 or at least one of claims 4 through 6, wherein the fitting is a front side window glass (B302) of the vehicle,

in the first step, the first measurement result information includes a measurement information of a front side window glass support portion, which is an adjustment portion on a leading body structure of the vehicle, the third measurement result information includes a measurement information of the front side window glass (B302), and the ideal mounting position is a mounting position on the leading body structure of the front side window glass (B302),

in the second step, the adjustment amount of the difference is a adjustment amount of thickness in the front side window glass support portion, and the instruction information is a selection and a mounting position of the adjustment member mounted on the front side window glass support portion, and

in the third step, the front side window glass (B302) is installed.

11. The method of manufacturing a railway vehicle according to at least one of the claims 3-6, wherein the fitting is a driver's cab of the vehicle,

in the first step, the first measurement result information includes a measurement information of a driver's cab support, which is an adjustment portion on a leading body structure (553) of the vehicle, the second measurement result information includes a measurement information of a circumference of the driver's cab, the third measurement result information includes a measurement information of the driver's cab, and the ideal mounting position is a mounting position on the leading body structure (553) of the driver's cab,

in the second step, the adjustment amount of the difference is an adjustment amount of thickness in the driver's cab support, and the instruction information is a selection and a mounting position of the adjustment member arranged on the driver's cab support, and

in the third step, the driver's cab is installed.

12. The method of manufacturing a railway vehicle according to at least one of claims 1 through 11, wherein in the second step, the instruction information includes a combination of adjustment members (13) as options, and the installation of the fitting in the third step is performed based on an arbitrary combination of adjustment members (13) selected from the options.

13. The method of manufacturing a railway vehicle according to at least one of claims 1 through 12, wherein in a case where the adjustment amount of the difference computed in the second step does not satisfy a restriction condition of the vehicle design information, it is notified that adjustment is not possible.

14. The method of manufacturing a railway vehicle according to claim 13, wherein at least either a portion where the restriction information is not satisfied or a reason why the restriction information is not satisfied is presented quantitatively as a notice notifying that the adjustment is not possible.

15. The method of manufacturing a railway vehicle according to at least one of claims 1 through 14, wherein the method uses a fitting installation instruction apparatus comprising a storage unit storing the vehicle design information, the first to third measurement result information and information of the adjustment members (13), a processing unit executing the respective steps, and an input/output unit.

**Patentansprüche**

1. Verfahren zum Herstellen eines Schienenfahrzeugs, das Folgendes umfasst:

einen ersten Schritt eines Berechnens einer idealen Installationsposition eines Ausbauelements, das an einer Karosseriestruktur (12) installiert werden soll, basierend auf Fahrzeugkonstruktionsinformationen (101), die sich auf die Karosseriestruktur (12) und das Ausbauelement des Fahrzeugs beziehen, und ersten Messergebnisinformationen (102), die durch Ausführen einer dreidimensionalen Messung eines Anpassungsabschnitts an der Karosseriestruktur (11), an der das Ausbauelement installiert wird, erfasst werden;

einen zweiten Schritt eines Ausgebens von Befehlsinformationen, die die Auswahl eines Anpassungselements (13) befehlen, das an dem Anpassungsabschnitt und der Anordnungsposition angeordnet werden soll, basierend auf einem Anpassungsbetrag einer Differenz an dem Anpassungsabschnitt, der aus der in dem ersten Schritt berechneten idealen Installationsposition des Ausbauelements und den ersten Messergebnisinformationen (102) berechnet wird, und Information eines Anpassungselements, das beim Installieren des Ausbauelements zum Anpassen der Differenz verwendet wird; und

ein dritter Schritt des Installierens des Ausbauelements basierend auf den Befehlsinformationen.

2. Verfahren zum Herstellen eines Schienenfahrzeugs nach Anspruch 1, wobei

Messergebnisinformationen eines nicht angepassten Abschnitts, der kein Abschnitt ist, in dem das Anpassungselement (13) angeordnet ist, sondern ein Abschnitt ist, der die Anordnung des Ausbauelements beeinflusst, als zweite Messergebnisinformationen festgelegt werden,

Messergebnisinformationen des Ausbauelements als dritte Messergebnisinformationen festgelegt werden und

der erste Schritt die ideale Installationsposition des Ausbauelements, das an der Karosseriestruktur installiert werden soll, auch basierend auf den zweiten Messergebnisinformationen oder den dritten Messergebnisinformationen zusätzlich zu den Fahrzeugkonstruktionsinformationen und den ersten Messergebnisinformationen berechnet.

3. Verfahren zum Herstellen eines Schienenfahrzeugs nach Anspruch 1, wobei

Messergebnisinformationen eines nicht angepassten Abschnitts, der kein Abschnitt ist, in dem das Anpassungselement (13) angeordnet ist, sondern ein Abschnitt ist, der die Anordnung des Ausbauelements beeinflusst, als zweite Messergebnisinformationen festgelegt werden,

Messergebnisinformationen des Ausbauelements als dritte Messergebnisinformationen festgelegt werden und

der erste Schritt die ideale Installationsposition des Ausbauelements, während eine vertikale oder horizontale Position des Ausbauelements, das an der Karosseriestruktur angeordnet werden soll, angepasst wird, auch basierend auf den zweiten Messergebnisinformationen und den dritten Messergebnisinformationen zusätzlich zu den Fahrzeugkonstruktionsinformationen und den ersten Messergebnisinformationen berechnet.

4. Verfahren zum Herstellen eines Schienenfahrzeugs nach mindestens einem der Ansprüche 1 bis 3, wobei

der dritte Schritt einen vierten Schritt eines Verarbeitens des Anpassungselements, das für die Installation verwendet wird, basierend auf den Befehlsinformationen und einen fünften Schritt eines Installierens des Ausbauelements unter Verwendung des in dem vierten Schritt verarbeiteten Anpassungselements umfasst und

die Anpassungselemente, die in dem fünften Schritt verwendet werden, in dem vierten Schritt im Voraus vorbereitet werden.

5. Verfahren zum Herstellen eines Schienenfahrzeugs nach mindestens einem der Ansprüche 1 bis 4, wobei

der zweite Schritt das Anpassungselement (13) für jede Sektion, die das Ausbauelement unterteilt, unter Verwendung von Längen- und Breiteninformationen des Anpassungselements (13) als Informationen des Anpassungselements (13) auswählt.

6. Verfahren zum Herstellen eines Schienenfahrzeugs nach einem der Ansprüche 1 bis 5, wobei

der zweite Schritt einen Fertigungsbefehl und einen Anordnungsbefehl des Anpassungselements (13) als Befehlsinformationen ausgibt.

7. Verfahren zum Herstellen eines Schienenfahrzeugs nach Anspruch 1 oder mindestens einem der Ansprüche 4 bis 6, wobei

das Ausbauelement eine Bodenplatte ist,

in dem ersten Schritt die ersten Messergebnisinformationen Messinformationen einer oberen Oberfläche eines Bodenträgers, der auf einem Untergestell des Fahrzeugs angeordnet ist und der ein Anpassungsabschnitt an der Karosseriestruktur ist, umfassen und die ideale Installationsposition eine ideale Position der oberen Oberfläche der Bodenplatte in Bezug auf ein Zielfahrzeug, an dem die Bodenplatte installiert wird, ist,

in dem zweiten Schritt der Anpassungsbetrag der Differenz ein Anpassungsbetrag einer Dicke an der oberen Oberfläche des Bodenträgers ist und die Befehlsinformationen eine Auswahl und eine Installationsposition des Anpassungselements (13), das auf der oberen Oberfläche des Bodenträgers angeordnet ist, sind und

in dem dritten Schritt die Bodenplatte installiert wird.

8. Verfahren zum Herstellen eines Schienenfahrzeugs nach Anspruch 7, wobei

die Fahrzeugkonstruktionsinformationen Wölbungssysteminformationen umfassen, die eine Krümmung bezüglich einer Wölbung definieren, und
die Wölbungssysteminformation verwendet werden, um die ideale Position der oberen Oberfläche der Bodenplatte in dem ersten Schritt zu berechnen.

9. Verfahren zum Herstellen eines Schienenfahrzeugs nach Anspruch 2 oder mindestens einem der Ansprüche 4 bis 6, wobei
das Ausbauelement eine Bodenplatte ist,
in dem ersten Schritt die Fahrzeugkonstruktionsinformationen Wölbungssysteminformationen, die eine Krümmung definieren, die sich auf eine Wölbung bezieht, umfassen, die ersten Messergebnisinformationen Messinformationen einer oberen Oberfläche eines Bodenträgers, der auf einem Untergestell des Fahrzeugs angeordnet ist und ein Anpassungsabschnitt auf der Karosseriestruktur ist, umfassen, die zweiten Messergebnisinformationen andere Messinformationen als das Untergestell (901) des Fahrzeugs umfassen, die eine Referenz der Wölbung oder Messinformationen eines Abschnitts, der eine Oberflächenanpassungsreferenz in Bezug auf die obere Oberfläche der Bodenplatte ist, sind, und die ideale Installationsposition eine ideale Position der oberen Oberfläche der Bodenplatte in Bezug auf ein Zielfahrzeug, an dem die Bodenplatte installiert wird, ist,
in dem zweiten Schritt der Anpassungsbetrag der Differenz ein Anpassungsbetrag einer Dicke an der oberen Oberfläche des Bodenträgers ist und die Befehlsinformationen eine Auswahl und eine Installationsposition des Anpassungselements, das auf der oberen Oberfläche des Bodenträgers angeordnet wird, sind und
in dem dritten Schritt die Bodenplatte installiert wird.

10. Verfahren zum Herstellen eines Schienenfahrzeugs nach Anspruch 2 oder mindestens einem der Ansprüche 4 bis 6, wobei
das Ausbauelement eine frontseitige Scheibe (B302) des Fahrzeugs ist,
in dem ersten Schritt die ersten Messergebnisinformationen Messinformationen eines Trägerabschnitts der frontseitigen Scheibe, der ein Anpassungsabschnitt auf einer vorderen Karosseriestruktur des Fahrzeugs ist, umfassen, die dritten Messergebnisinformationen Messinformationen der frontseitigen Scheibe (B302) umfassen und die ideale Installationsposition eine Installationsposition an der vorderen Karosseriestruktur der frontseitigen Scheibe (B302) ist,
in dem zweiten Schritt der Anpassungsbetrag der Differenz ein Anpassungsbetrag einer Dicke in dem Trägerabschnitts der frontseitigen Scheibe ist und die Befehlsinformationen eine Auswahl und eine Installationsposition des Anpassungselements, das an dem Trägerabschnitts der frontseitigen Scheibe montiert wird, sind und
in dem dritten Schritt die frontseitige Scheibe (B302) installiert wird.

11. Verfahren zum Herstellen eines Schienenfahrzeugs nach mindestens einem der Ansprüche 3 bis 6, wobei
das Ausbauelement ein Führerhaus des Fahrzeugs ist,
in dem ersten Schritt die ersten Messergebnisinformationen Messinformationen eines Führerhausträgers, der ein Anpassungsabschnitt an einer vorderen Karosseriestruktur (553) des Fahrzeugs ist, umfassen, die zweiten Messergebnisinformationen Messinformationen eines Umfangs des Führerhauses umfassen, die dritten Messergebnisinformationen Messinformationen des Führerhauses umfassen und die ideale Installationsposition eine Installationsposition an der vorderen Karosseriestruktur (553) des Führerhauses ist,
in dem zweiten Schritt der Anpassungsbetrag der Differenz ein Anpassungsbetrag einer Dicke in dem Führerhausträger ist und die Befehlsinformationen eine Auswahl und eine Installationsposition des Anpassungselements, das auf dem Führerhausträger angeordnet wird, sind und
in dem dritten Schritt das Führerhaus installiert wird.

12. Verfahren zum Herstellen eines Schienenfahrzeugs nach mindestens einem der Ansprüche 1 bis 11, wobei
in dem zweiten Schritt die Befehlsinformationen eine Kombination von Anpassungselementen (13) als Optionen umfassen und
die Installation des Ausbauelements in dem dritten Schritt basierend auf einer beliebigen Kombination von Anpassungselementen (13), die aus den Optionen ausgewählt ist, durchgeführt wird.

13. Verfahren zum Herstellen eines Schienenfahrzeugs nach mindestens einem der Ansprüche 1 bis 12, wobei
in einem Fall, in dem der Anpassungsbetrag der Differenz, der in dem zweiten Schritt berechnet wird, eine Beschränkungsbedingung der Fahrzeugkonstruktionsinformationen nicht erfüllt, mitgeteilt wird, dass eine Anpassung nicht möglich ist.

14. Verfahren zum Herstellen eines Schienenfahrzeugs nach Anspruch 13, wobei

**EP 3 085 597 B1**

zumindest ein Abschnitt, in dem die Beschränkungsinformationen nicht erfüllt sind oder ein Grund, warum die Beschränkungsinformationen nicht erfüllt sind, quantitativ als eine Mitteilung vorgelegt wird, die mitteilt, dass die Anpassung nicht möglich ist.

15. Verfahren zum Herstellen eines Schienenfahrzeugs nach mindestens einem der Ansprüche 1 bis 14, wobei das Verfahren eine Ausbauelementinstallations-Befehlsvorrichtung verwendet, die eine Speichereinheit, die die Fahrzeugkonstruktionsinformationen, die ersten bis dritten Messergebnisinformationen und Informationen der Anpassungselemente (13) speichert, eine Verarbeitungseinheit, die die jeweiligen Schritte ausführt, und eine Eingabe/Ausgabe-Einheit umfasst.

**Revendications**

1. Procédé de fabrication d'un véhicule ferroviaire comprenant :

   une première étape consistant à calculer une position d'installation idéale d'un équipement installé sur une structure de corps (12), sur la base d'une information de conception (101) en relation avec la structure de corps (12) et l'équipement du véhicule, et une première information de résultat de mesure (102) acquise en exécutant une mesure tridimensionnelle d'une portion d'ajustement sur la structure de corps (11) sur laquelle l'équipement est installé ;
   une seconde étape consistant à délivrer une information d'instruction donnant instruction de sélectionner un élément d'ajustement (13) agencé au niveau de la portion d'ajustement et à la position d'agencement, sur la base d'une différence quantitative d'ajustement au niveau de la portion d'ajustement calculée à partir de la position d'installation idéale de l'équipement calculée dans la première étape et de la première information de résultat de mesure (102), et une information d'un élément d'ajustement utilisé pour ajuster la différence lorsqu'on installe l'équipement ; et
   une troisième étape consistant à installer l'équipement sur la base de l'information d'instruction.

2. Procédé de fabrication d'un véhicule ferroviaire selon la revendication 1, dans lequel :

   une information de résultat de mesure d'une portion non ajustée qui n'est pas une portion à laquelle l'élément d'ajustement (13) est agencé qui est une portion qui influence l'agencement de l'équipement est fixée comme une seconde information de résultat de mesure,
   une information de résultat de mesure de l'équipement est fixée comme une troisième information de résultat de mesure, et
   la première étape calcule la position d'installation idéale de l'équipement installé sur la structure de corps, également sur la base de la seconde information de résultat de mesure ou de la troisième information de résultat de mesure en plus de l'information de conception du véhicule et de la première information de résultat de mesure.

3. Procédé de fabrication d'un véhicule ferroviaire selon la revendication 1, dans lequel :

   une information de résultat de mesure d'une portion non ajustée qui n'est pas une portion à laquelle l'élément d'ajustement (13) est agencé mais qui est une position qui influence l'agencement de l'équipement est fixée comme seconde information de résultat de mesure,
   une information de résultat de mesure de l'équipement est fixée comme une troisième information de résultat de mesure, et
   la première étape calcule la position d'installation idéale de l'équipement, tout en ajustant une position verticale ou horizontale de l'équipement agencé sur la structure de corps, également sur la base de la seconde et de la troisième information de résultat de mesure en plus de l'information de conception du véhicule et de la première information de résultat de mesure.

4. Procédé de fabrication d'un véhicule ferroviaire selon l'une au moins des revendications 1 à 3, dans lequel :

   la troisième étape inclut une quatrième étape consistant à traiter l'élément d'ajustement utilisé pour l'installation en se basant sur l'information d'instruction, et une cinquième étape consistant à installer l'équipement en utilisant l'élément d'ajustement traité dans la quatrième étape, et
   les éléments d'ajustement utilisés dans la cinquième étape sont préparés à l'avance dans la quatrième étape.

**5.** Procédé de fabrication d'un véhicule ferroviaire selon l'une quelconque des revendications 1 à 4, dans lequel la seconde étape sélectionne l'élément d'ajustement (13) pour chaque section ayant divisé l'équipement, en utilisant une information de longueur et de largeur de l'élément d'ajustement (13) à titre d'information de l'élément d'ajustement (13).

**6.** Procédé de fabrication d'un véhicule ferroviaire selon l'une quelconque des revendications 1 à 5, dans lequel la seconde étape délivre une instruction de fabrication et une instruction d'agencement de l'élément d'ajustement (13) à titre d'information d'instruction.

**7.** Procédé de fabrication d'un véhicule ferroviaire selon la revendication 1 ou selon l'une au moins des revendications 4 à 6, dans lequel l'équipement est une plaque de plancher,
dans la première étape, la première information de résultat de mesure inclut une information de mesure d'une surface supérieure d'un support de plancher disposé sur un châssis inférieur du véhicule, qui est une portion d'ajustement de la structure de corps, et la position d'installation idéale et une position idéale de la surface supérieure de la plaque de plancher par rapport à un véhicule cible sur lequel la plaque de plancher est installée,
dans la seconde étape, l'ajustement quantitatif de la différence est un ajustement quantitatif de l'épaisseur à la surface supérieure du support de plancher, et l'information d'instruction est une sélection et une position d'installation de l'élément d'ajustement (13) agencé sur la surface supérieure du support de plancher, et
dans la troisième étape, la plaque de plancher est installée.

**8.** Procédé de fabrication d'un véhicule ferroviaire selon la revendication 7, dans lequel
l'information de conception du véhicule inclut une information de système de cambrage définissant une courbure concernant un cambrage, et
l'information de système de cambrage est utilisée pour calculer la position idéale de la surface supérieure de la plaque de plancher dans la première étape.

**9.** Procédé de fabrication d'un véhicule ferroviaire selon la revendication 2 où l'une au moins des revendications 4 à 6, dans lequel l'équipement est une plaque de plancher,
dans la première étape, l'information de conception du véhicule inclut une information de système de cambrage définissant une courbure en relation avec un cambrage, la première information de résultat de mesure inclut une information de mesure d'une surface supérieure d'un support de plancher disposé sur un châssis inférieur du véhicule, qui est une portion d'ajustement sur la structure de corps, la seconde information de résultat de mesure inclut une information de mesure autre que le châssis inférieur (901) du véhicule étant une référence du cambrage ou une information de mesure d'une portion étant une référence d'accord de surface à l'égard de la surface supérieure de la plaque de plancher, et la position d'installation idéale est une position idéale de la surface supérieure de la plaque de plancher par rapport à un véhicule cible sur lequel la plaque de plancher est installée, dans la seconde étape, l'ajustement quantitatif de la différence est un ajustement quantitatif de l'épaisseur à la surface supérieure du support de plancher, et l'information d'instruction est une sélection et une position d'installation de l'élément d'ajustement agencé sur la surface supérieure du support de plancher, et
dans la troisième étape, la plaque de plancher est installée.

**10.** Procédé de fabrication d'un véhicule ferroviaire selon la revendication 2 où l'une au moins des revendications 4 à 6, dans lequel l'équipement est un vitrage (B302) sur le côté avant du véhicule,
dans la première étape, la première information de résultat de mesure inclut une information de mesure d'une portion de support pour vitrage sur le côté avant, qui est une portion d'ajustement sur une structure de corps en avant du véhicule, la troisième information de résultat de mesure inclut une information de mesure du vitrage (B302) sur le côté avant, et la position de montage idéale est une position de montage sur la structure de corps du vitrage sur le côté avant (B302),
dans la seconde étape, l'ajustement quantitatif de la différence est un ajustement quantitatif de l'épaisseur de la portion de support du vitrage sur le côté avant, et l'information d'instruction est une sélection et une position de montage de l'élément d'ajustement monté sur la portion de support de vitrage sur le côté avant, et
dans la troisième étape, le vitrage (B302) sur le côté avant est installé.

**11.** Procédé de fabrication d'un véhicule ferroviaire selon l'une au moins des revendications 3 à 6, dans lequel l'équipement est une cabine de conducteur du véhicule,
dans la première étape, la première information de résultat de mesure inclut une information de mesure d'un support pour la cabine conducteur, qui est une portion d'ajustement sur une structure de corps (553) à l'avant du véhicule,
la seconde information de résultat de mesure inclut une information de mesure d'une circonférence de la cabine de conducteur, la troisième information de résultat de mesure inclut une information de mesure de la cabine de conducteur, et la position de montage idéale est une position de montage de la cabine de conducteur sur la structure de corps (553) à l'avant, et

dans la troisième étape, la cabine de conducteur est installée.

12. Procédé de fabrication d'un véhicule ferroviaire selon l'une au moins des revendications 1 à 11, dans lequel
dans la seconde étape, l'information d'instruction inclut une combinaison d'éléments d'ajustement (13) à titre d'options, et

l'installation de l'équipement dans la troisième étape est exécutée sur la base d'une combinaison arbitraire d'éléments d'ajustement (13) sélectionnés à partir des options.

13. Procédé de fabrication d'un véhicule ferroviaire selon l'une au moins des revendications 1 à 12, dans lequel
dans un cas dans lequel l'ajustement quantitatif de la différence calculée dans la seconde étape ne satisfait pas une condition de restriction de l'information de conception du véhicule, il est notifié que l'ajustement n'est pas possible.

14. Procédé de fabrication d'un véhicule ferroviaire selon la revendication 13, dans lequel
on présente, de façon quantitative à titre de notification que l'ajustement n'est pas possible, au moins soit le fait qu'une portion à laquelle information de restriction n'est pas satisfaite soit une raison pour laquelle l'information de restriction n'est pas satisfaite.

15. Procédé de fabrication d'un véhicule ferroviaire selon l'une au moins des revendications 1 à 14, dans lequel
le procédé utilise un appareil d'instruction d'installation d'équipement comprenant une unité de stockage qui stocke l'information de conception du véhicule, la première, la seconde et la troisième information de résultat de mesure et l'information des éléments d'ajustement (13), une unité de traitement exécutant les étapes respectives, et une unité d'entrée/sortie.

FIG. 1

FIG. 2

| | (A) BODY STRUCTURE | | (B) FITTING |
|---|---|---|---|
| 101 | (A1) ADJUSTMENT PORTION | (A2) NON-ADJUSTED PORTION | |
| VEHICLE DESIGN INFORMATION | ○ | ○ (RESTRICTION CONDITION) | ○ |
| MEASUREMENT RESULT INFORMATION | ○ (WELDED STRUCTURE) | ( i ) | ( ii ) |

102

FIG. 3

| TYPE | (A1) MEASUREMENT RESULT INFORMATION OF ADJUSTMENT PORTION (ALWAYS ○) | (A2) MEASUREMENT RESULT INFORMATION OF NON-ADJUSTED PORTION ( i ) | (B) MEASUREMENT RESULT INFORMATION OF FITTING ( ii ) | EMBODIMENT |
|---|---|---|---|---|
| 1 | ○ | ✕ | ✕ | (SECOND EMBODIMENT) FLOOR BOARD INSTALLATION |
| 2 | ○ | ○ | ✕ | (THIRD AND FOURTH EMBODIMENTS) FLOOR BOARD INSTALLATION (CONSIDERATION ON CAMBER AND DOOR) |
| 3 | ○ | ✕ | ○ | (FIFTH EMBODIMENT) FRONT SIDE WINDOW GLASS INSTALLATION |
| 4 | ○ | ○ | ○ | (SIXTH EMBODIMENT) DRIVER'S CABIN INSTALLATION |

FIG. 4

111

FITTING INSTALLATION APPARATUS

121

INPUT/OUTPUT UNIT

122

PROCESSOR

123

MEMORY

104

FITTING ADJUSTMENT AMOUNT CALCULATION PROCESSING UNIT

101

VEHICLE DESIGN INFORMATION

105

ADJUSTMENT MEMBER INSTRUCTION GENERATION PROCESSING UNIT

102

MEASUREMENT RESULT INFORMATION

103

ADJUSTMENT MEMBER INFORMATION

FIG. 5

MEASUREMENT RESULT
INFORMATION
102

VEHICLE DESIGN INFORMATION
101

FITTING ADJUSTMENT
AMOUNT CALCULATION
PROCESSING UNIT
104

ADJUSTMENT MEMBER
INFORMATION
103

ADJUSTMENT MEMBER
INSTRUCTION GENERATION
PROCESSING UNIT
105

ADJUSTMENT MEMBER
FABRICATION INSTRUCTION
201

ADJUSTMENT MEMBER
ARRANGEMENT INSTRUCTION
202

33

FIG. 6

MEASUREMENT RESULT INFORMATION    102

FLOOR SUPPORT MEASUREMENT TABLE

321

VEHICLE DESIGN INFORMATION    101

FLOOR SUPPORT TABLE    311

AREA TABLE    312

ADJUSTMENT MEMBER CLASSIFICATION TABLE    313

CAMBER SYSTEM    314

ADJUSTMENT MEMBER INFORMATION    103

ADJUSTMENT MEMBER TABLE    331

FIG. 7 〜／321

(FLOOR SUPPORT
     MEASUREMENT TABLE)

| |
|---|
| FLOOR SUPPORT MEASUREMENT POINT ID |
| REFERENCE COORDINATE (X,Y,Z) |
| MEASURED COORDINATE (X,Y,Z) |
| DEVIATION |
| FLOOR SUPPORT ID |
| NUMBER OF MEASUREMENTS WITHIN SAME FLOOR SUPPORT |
| RADIUS OF MEASURING PROBE |

〜／311

(FLOOR SUPPORT TABLE)

| |
|---|
| FLOOR SUPPORT ID |
| AREA ID |
| CENTER COORDINATE (X,Y) OF START POINT |
| CENTER COORDINATE (X, Y) OF END POINT |
| ADJUSTMENT MEMBER SPECIFIED LENGTH |
| ADJUSTMENT MEMBER SPECIFIED WIDTH |
| ADJUSTMENT MEMBER SPECIFIED THICKNESS |
| DESIGN-BASED UPPER SURFACE HEIGHT OF FLOOR BOARD |
| UPPER LIMIT VALUE OF ADJUSTMENT MEMBER THICKNESS |
| LOWER LIMIT VALUE OF ADJUSTMENT MEMBER THICKNESS |
| THICKNESS PITCH OF ADJUSTMENT MEMBER |
| ADJUSTMENT MEMBER CLASSIFICATION ID |

〜／312

(AREA TABLE)

| |
|---|
| AREA ID |
| VEHICLE TYPE |
| CAR NUMBER |
| LARGE AREA |
| SMALL AREA |

〜／313

(ADJUSTMENT MEMBER
    CLASSIFICATION TABLE)

| |
|---|
| ADJUSTMENT MEMBER CLASSIFICATION ID |
| MEMBER NAME |
| MATERIAL |
| ADJUSTMENT METHOD |

〜／331

(ADJUSTMENT MEMBER TABLE)

| |
|---|
| ADJUSTMENT MEMBER ID |
| FLOOR SUPPORT ID |
| ADJUSTMENT MEMBER NUMBER WITHIN SAME FLOOR SUPPORT ID |
| XY COORDINATE OF START POINT (CENTER OF WIDTH OF ADJUSTMENT MEMBER) |
| XY COORDINATE OF END POINT (CENTER OF WIDTH OF ADJUSTMENT MEMBER) |
| ADJUSTMENT MEMBER LENGTH |
| ADJUSTMENT MEMBER WIDTH |
| ADJUSTMENT MEMBER THICKNESS |
| ADJUSTMENT MEMBER CLASSIFICATION ID |

# FIG. 8

| FLOOR SUPPORT ID | AREA ID | CENTER COORDINATE X1 OF START POINT | CENTER COORDINATE Y1 OF START POINT | CENTER COORDINATE X2 OF END POINT | CENTER COORDINATE Y2 OF END POINT |
|---|---|---|---|---|---|
| FS001 | ABC02IP13GM | −7500 | 1200 | −4500 | 1200 |
| FS002 | ABC02IP13GM | −3500 | 1200 | −500 | 1200 |
| FS003 | ABC02IP13GM | 500 | 1200 | 3500 | 1200 |
| FS004 | ABC02IP13GM | 4500 | 1200 | 7500 | 1200 |
| FS005 | ABC02IP13CT | −7000 | 400 | −1000 | 400 |

| ADJUSTMENT MEMBER SPECIFIED LENGTH | ADJUSTMENT MEMBER SPECIFIED WIDTH | ADJUSTMENT MEMBER SPECIFIED THICKNESS | DESIGN-BASED FLOOR BOARD UPPER SURFACE HEIGHT | UPPER LIMIT VALUE OF ADJUSTMENT MEMBER THICKNESS | LOWER LIMIT VALUE OF ADJUSTMENT MEMBER THICKNESS | THICKNESS PITCH OF ADJUSTMENT MEMBER | ADJUSTMENT MEMBER CLASSIFICATION ID |
|---|---|---|---|---|---|---|---|
| 3000 | 400 | 3.0 | 100 | 10.0 | 1.0 | 1.0 | AT01 |
| 3000 | 400 | 3.0 | 100 | 10.0 | 1.0 | 1.0 | AT01 |
| 3000 | 400 | 3.0 | 100 | 10.0 | 1.0 | 1.0 | AT01 |
| 3000 | 400 | 3.0 | 100 | 10.0 | 1.0 | 1.0 | AT01 |
| 6000 | 400 | 3.0 | 100 | 10.0 | 1.0 | 1.0 | AT01 |

FIG. 9

| AREA ID | VEHICLE TYPE | CAR NUMBER | LARGE AREA | SMALL AREA |
|---|---|---|---|---|
| ABC02IP13GM | ABC | 2 | CABIN PORTION | 13 SIDE WINDOW BOTTOM |
| ABC02IP13CT | | | | 13 CENTER |
| ABC02IP24CT | | | | 24 CENTER |
| ABC02IP24GM | | | | 24 SIDE WINDOW BOTTOM |
| ABC02ZUxxxx | | | FRONT SIDE INNER END PARTITION | Null |
| ABC02KUxxxx | | | REAR SIDE INNER END PARTITION | Null |
| ABC02ZSGDxx | | | FRONT SIDE CAR END PORTION | SIDE DOOR OPENING |
| ABC02ZSSTxx | | | | OUTER END PORTION |
| ABC02ZSSNxx | | | | OTHERS |
| ABC02KSGDxx | | | REAR SIDE CAR END PORTION | SIDE DOOR OPENING |
| ABC02KSSTxx | | | | OUTER END PORTION |
| ABC02KSSNxx | | | | OTHERS |
| DEF01IPAxxx | DEF | 1 | CABIN PORTION | A |
| DEF01IPBxxx | | | | B |
| DEF01IPCxxx | | | | C |
| DEF01IPDxxx | | | | D |
| DEF01IPExxx | | | | E |
| DEF01IPFxxx | | | | F |

# FIG. 10

701

SIDE VIEW

WINDOW    DOOR

(FRONT SIDE)

ROOF

SIDE

(REAR SIDE)

UNDERFRAME

702

UPPER VIEW
(FLOOR SUPPORT ARRANGEMENT)    (1-3 SIDE)

(FRONT SIDE)

(REAR SIDE)

(2-4 SIDE)

703

UPPER VIEW
(FLOOR BOARD ARRANGEMENT)    A

A

FRONT
VEHICLE
END
PORTION

FRONT
INNER
END
PARTITION
PORTION

CABIN PORTION

REAR
INNER
END
PARTITION
PORTION

REAR
VEHICLE
END
PORTION

38

# FIG.11

801

FLOOR SUPPORT ID VIEW

802

FLOOR SUPPORT MEASUREMENT POINT ID VIEW

## FIG. 12

FLOOR BOARD
905

NON-ADJUSTMENT MEMBER
904

UPPER SURFACE
OF UNDERFRAME
901

ADJUSTMENT
MEMBER
903

FLOOR SUPPORT
902

FLOOR BOARD
THICKNESS (Df)

NON-ADJUSTMENT
MEMBER THICKNESS (Dn)

ADJUSTMENT MEMBER
THICKNESS (Da)

FLOOR BOARD
UPPER SURFACE
HEIGHT (Hf)

FLOOR SUPPORT
UPPER SURFACE HEIGHT (Hs)

FIG.13

(a)

(b)

(c)

FIG.14

| ADJUSTMENT MEMBER CLASSIFICATION ID | MEMBER NAME | MATERIAL | ADJUSTMENT METHOD |
|---|---|---|---|
| AT01 | LINER (1 mm THICKNESS) | VINYL CHLORIDE | LAMINATION |
| AT02 | LINER (0.5 mm THICKNESS) | SUS304 | LAMINATION |
| AT03 | RUBBER SHEET (1 mm THICKNESS) | STYRENE-BUTADIENE | LAMINATION |
| AT04 | RUBBER SHEET (1 mm THICKNESS) | CHLOROPRENE | LAMINATION |
| AT05 | ADJUSTING SCREW (M8-L30) | SS400 | HEXAGONAL NUT FASTENING |
| AT06 | ADJUSTING SCREW (M6-L20) | SS400 | HEXAGONAL NUT FASTENING |
| AT07 | 3D PRINTER (MELT DEPOSITION) | ABS | MOLDING |
| AT08 | 3D PRINTER (POWDER LAMINATION) | SUS304 | MOLDING |

FIG.15

| FLOOR SUPPORT MEASUREMENT POINT ID | REFERENCE COORDINATE X | REFERENCE COORDINATE Y | REFERENCE COORDINATE Z | MEASURED COORDINATE X | MEASURED COORDINATE Y | MEASURED COORDINATE Z | DEVIATION X | DEVIATION Y | DEVIATION Z |
|---|---|---|---|---|---|---|---|---|---|
| M001 | −7490 | 1200 | 72.5 | −7484 | 1200 | 74.3 | 6 | 0 | 1.8 |
| M002 | −4510 | 1200 | 72.5 | −4508 | 1200 | 73.7 | 2 | 0 | 1.2 |
| M003 | −3490 | 1200 | 72.5 | −3498 | 1203 | 72.9 | −8 | 3 | 0.4 |
| M004 | −510 | 1200 | 72.5 | −519 | 1200 | 74.2 | −9 | 0 | 1.7 |
| M005 | 510 | 1200 | 72.5 | 512 | 1204 | 73.1 | −2 | 4 | 0.6 |

| FLOOR SUPPORT ID | NUMBER OF MEASUREMENTS WITHIN SAME FLOOR SUPPORT | RADIUS OF MEASURING PROBE |
|---|---|---|
| FS001 | 2 | 3.0 |
| FS001 | 2 | 3.0 |
| FS002 | 2 | 3.0 |
| FS002 | 2 | 3.0 |
| FS003 | 2 | 3.0 |

# FIG.16

START

RECEIVE INPUT OF VEHICLE DESIGN INFORMATION 101 AND MEASUREMENT RESULT INFORMATION 102 — S101

RECEIVE INPUT OF SELECTION OF IDEAL UPPER SURFACE OF FLOOR BOARD — S102

COMPUTE IDEAL UPPER SURFACE OF FLOOR BOARD — S103

SELECT ONE FLOOR SUPPORT ID — S104

SELECT ALL FLOOR SUPPORT MEASUREMENT POINT IDs WITHIN SAME FLOOR SUPPORT ID — S105

COMPUTE ACTUAL FLOOR SUPPORT UPPER SURFACE EXPRESSION Hs(x) — S106

COMPUTE POINT ON IDEAL UPPER SURFACE OF FLOOR SUPPORT CORRESPONDING TO FLOOR SUPPORT MEASUREMENT POINT, AND COMPUTE IDEAL FLOOR BOARD UPPER SURFACE EXPRESSION Hf'(x) — S107

COMPUTE EXPRESSION Da'(x) OF IDEAL ADJUSTMENT MEMBER THICKNESS USING EXPRESSION 4 — S108

ADJUSTMENT MEMBER THICKNESS PITCH IS SPECIFIED? — S109

NO

YES

N=1 — S110

COMPUTE POSITION AND THICKNESS OF ADJUSTMENT MEMBER FROM EXPRESSION 5 — S111

ADJUSTMENT MEMBER THICKNESS OF WHOLE SURFACE OF FLOOR SUPPORT ID HAS BEEN COMPUTED? — S112

NO — N=N+1 — S113

YES

ADJUSTMENT MEMBER THICKNESS SATISFIES UPPER AND LOWER LIMIT VALUES? — S114

NO — OUTPUT ERROR LOG — S115

YES

CALCULATION OF ALL FLOOR SUPPORTS HAVE BEEN COMPLETED? — S116

NO

YES

OUTPUT ADJUSTMENT MEMBER INFORMATION — S117

END

FIG.17

■ SEARCH TARGET VEHICLE

CAR TYPE | ABC | FORMATION | 8 | CAR NUMBER |

SEARCH

■ SELECT TARGET VEHICLE

☐ CAR TYPE ABC, 8-CAR FORMATION, CAR NUMBER 1
☑ CAR TYPE ABC, 8-CAR FORMATION, CAR NUMBER 2
☐ CAR TYPE ABC, 8-CAR FORMATION, CAR NUMBER 3
☐ CAR TYPE ABC, 8-CAR FORMATION, CAR NUMBER 4
☐ CAR TYPE ABC, 8-CAR FORMATION, CAR NUMBER 5

■ SELECT IDEAL UPPER SURFACE OF FLOOR BOARD

☐ DESIGN-BASED UPPER SURFACE OF FLOOR BOARD
☑ CONSIDER CAMBER SYSTEM

■ EXECUTE COMPUTATION PROCESSING OF ADJUSTMENT MEMBER INFORMATION

EXECUTE

45

FIG.18

SIDE VIEW (WITHOUT CAMBER)

SIDE VIEW (WITH CAMBER)

FIG.19

FIG. 20

Y-Z CROSS-SECTION                    X-Z CROSS-SECTION

FIG. 21

DESIGN-BASED
UPPER SURFACE
OF FLOOR BOARD
DIRECTLY ABOVE M001
(HEIGHT: Hf1)

DESIGN-BASED
UPPER SURFACE
OF FLOOR BOARD
DIRECTLY ABOVE M002
(HEIGHT: Hf2)

DESIGN-BASED UPPER
SURFACE OF FLOOR BOARD

DESIGN-BASED
ADJUSTMENT
MEMBER
THICKNESS
(Da)

DESIGN-BASED UPPER
SURFACE OF FLOOR SUPPORT

MEASUREMENT POINT M001
(HEIGHT: Hs1)

MEASUREMENT POINT M002
(HEIGHT: Hs2)

## FIG. 22

Hf1´

Hf2´

Hf1

Hf2

Hs1´

Hs2´

Hs1

Hs2

IDEAL UPPER SURFACE
OF FLOOR BOARD

DESIGN-BASED UPPER
SURFACE OF FLOOR BOARD

ACTUAL UPPER
SURFACE OF FLOOR SUPPORT

DESIGN-BASED UPPER
SURFACE OF FLOOR SUPPORT

## FIG.23

IDEAL ADJUSTMENT
MEMBER THICKNESS
EXPRESSION Da´(x)

Hf1´

Hf2´

IDEAL FLOOR BOARD
UPPER SURFACE
EXPRESSION Hf´(x)

Hs1´

Hs2´

ACTUAL FLOOR SUPPORT
UPPER SURFACE
EXPRESSION Hs´(x)

z

x

FIG.24

COMPUTED ADJUSTMENT
MEMBER THICKNESS

N=4
N=3
N=2
N=1

ADJUSTMENT MEMBER
THICKNESS PITCH (P)

Z

X

X=−7500     X=−7060     X=−5900     X=−4500

# FIG.25

(a) WHEN THERE IS ONE MEASUREMENT POINT WITHIN THE SAME FLOOR SUPPORT

IDEAL UPPER SURFACE OF FLOOR BOARD

IDEAL FLOOR BOARD UPPER SURFACE, EXPRESSION $Hf'(x)$

ACTUAL FLOOR SUPPORT UPPER SURFACE, EXPRESSION $Hs'(x)$

(b) WHEN THERE ARE THREE OR MORE MEASUREMENT POINTS WITHIN THE SAME FLOOR SUPPORT

IDEAL FLOOR BOARD UPPER SURFACE, EXPRESSION $Hf'(x)$

ACTUAL UPPER SURFACE OF FLOOR BOARD

ACTUAL FLOOR SUPPORT UPPER SURFACE, EXPRESSION $Hs'(x)$

FIG.26

| ADJUSTMENT MEMBER ID | FLOOR SUPPORT ID | ADJUSTMENT MEMBER NUMBER WITHIN SAME FLOOR SUPPORT ID | CENTER COORDINATE X3 OF ADJUSTMENT MEMBER START POINT | CENTER COORDINATE Y3 OF ADJUSTMENT MEMBER START POINT | CENTER COORDINATE X4 OF ADJUSTMENT MEMBER END POINT | CENTER COORDINATE Y4 OF ADJUSTMENT MEMBER END POINT |
|---|---|---|---|---|---|---|
| AD001 | FS001 | 1 | −7500 | 1200 | −7060 | 1200 |
| AD002 | FS001 | 2 | −7060 | 1200 | −5900 | 1200 |
| AD003 | FS001 | 3 | −5900 | 1200 | −4500 | 1200 |
| AD004 | FS002 | 1 | −3500 | 1200 | −2500 | 1200 |
| AD005 | FS002 | 2 | −2500 | 1200 | −1500 | 1200 |

| ADJUSTMENT MEMBER LENGTH | ADJUSTMENT MEMBER WIDTH | ADJUSTMENT MEMBER THICKNESS | ADJUSTMENT MEMBER CLASSIFICATION ID |
|---|---|---|---|
| 440 | 40 | 2 | AT01 |
| 1160 | 40 | 3 | AT01 |
| 1400 | 40 | 4 | AT01 |
| 1000 | 40 | 6 | AT01 |
| 1000 | 40 | 5 | AT01 |

FIG.27

START POINT OF ADJUSTMENT MEMBER ID AD004 (x3,y3)

END POINT OF ADJUSTMENT MEMBER ID AD004 (x4,y4)

START POINT OF ADJUSTMENT MEMBER ID AD005 (x3,y3)

END POINT OF ADJUSTMENT MEMBER ID AD005 (x4,y4)

START POINT OF FLOOR SUPPORT (x1,y1)

ADJUSTMENT MEMBER ID AD004

ADJUSTMENT MEMBER ID AD005

END POINT OF FLOOR SUPPORT (x2,y2)

FIG.28

```
                    ┌─────────────┐
                    │    START    │
                    └─────────────┘
                           │
                           ▼
┌──────────────────────────────────────────────┐        S201
│ RECEIVE INPUT OF VEHICLE DESIGN INFORMATION 101│
│ AND ADJUSTMENT MEMBER INFORMATION 103          │
└──────────────────────────────────────────────┘
                           │
                           ▼
┌──────────────────────────────────────────────┐        S202
│ RECEIVE INPUT OF INSTRUCTION INFORMATION       │
│ FOR ADJUSTMENT MEMBER                           │
└──────────────────────────────────────────────┘
                           │
                           ▼
┌──────────────────────────────────────────────┐        S203
│           COMPUTE PACKING NUMBER               │
└──────────────────────────────────────────────┘
                           │
                           ▼
┌──────────────────────────────────────────────┐        S204
│          OUTPUT ADJUSTMENT MEMBER              │
│          FABRICATION INSTRUCTION               │
└──────────────────────────────────────────────┘
                           │
                           ▼
┌──────────────────────────────────────────────┐        S205
│          OUTPUT ADJUSTMENT MEMBER              │
│          ARRANGEMENT INSTRUCTION               │
└──────────────────────────────────────────────┘
                           │
                           ▼
                    ┌─────────────┐
                    │     END     │
                    └─────────────┘
```

## FIG.29

ADJUSTMENT MEMBER FABRICATION INSTRUCTION

* ORDER NUMBER : #####
* ORDERER : TARO HITACHI
* ORDER DATE : 2015/##/##
* DELIVERY DATE : 2015/##/##

* LIST OF MANUFACTURE ADJUSTMENT MEMBERS

| ADJUSTMENT MEMBER ID | ADJUSTMENT MEMBER LENGTH [mm] | ADJUSTMENT MEMBER WIDTH [mm] | ADJUSTMENT MEMBER THICKNESS [mm] | MATERIAL | PACKING NUMBER |
|---|---|---|---|---|---|
| AD001 | 440 | 40 | 2 | VINYL CHLORIDE | 1-1 |
| AD002 | 1160 | 40 | 3 | VINYL CHLORIDE | 1-1 |
| AD003 | 1400 | 40 | 4 | VINYL CHLORIDE | 1-1 |
| AD004 | 1000 | 40 | 6 | VINYL CHLORIDE | 1-2 |
| AD005 | 1000 | 40 | 5 | VINYL CHLORIDE | 1-2 |

# FIG.30

ADJUSTMENT MEMBER ARRANGEMENT INSTRUCTION

• TARGET              : CAR TYPE ABC, 8-CAR FORMATION, CAR NUMBER 4
• INSTALLATION DATE   : 2015/##/##

• ADJUSTMENT MEMBER ARRANGEMENT

| | AD002 | AD003 | | AD004 | AD005 | | AD006 | AD007 | | AD008 | AD009 |
AD001

(FRONT SIDE)                                                                (REAR SIDE)

• LIST OF ADJUSTMENT MEMBERS

| ADJUSTMENT MEMBER ID | ADJUSTMENT MEMBER LENGTH [mm] | ADJUSTMENT MEMBER WIDTH [mm] | ADJUSTMENT MEMBER THICKNESS [mm] | MATERIAL | PACKING NUMBER |
|---|---|---|---|---|---|
| AD001 | 440 | 40 | 2 | VINYL CHLORIDE | 1-1 |
| AD002 | 1160 | 40 | 3 | VINYL CHLORIDE | 1-1 |
| AD003 | 1400 | 40 | 4 | VINYL CHLORIDE | 1-1 |
| AD004 | 1000 | 40 | 6 | VINYL CHLORIDE | 1-2 |
| AD005 | 1000 | 40 | 5 | VINYL CHLORIDE | 1-2 |

FIG.31

FIG.32

MEASUREMENT RESULT INFORMATION
- FLOOR SUPPORT MEASUREMENT TABLE
- CAMBER REFERENCE MEASUREMENT TABLE

102
321
322

VEHICLE DESIGN INFORMATION
- FLOOR SUPPORT TABLE
- AREA TABLE
- ADJUSTMENT MEMBER CLASSIFICATION TABLE
- CAMBER SYSTEM

101
311
312
313
314

ADJUSTMENT MEMBER INFORMATION
- ADJUSTMENT MEMBER TABLE

103
331

# FIG.33

| CAMBER REFERENCE MEASUREMENT POINT ID | REFERENCE COORDINATE X | REFERENCE COORDINATE Y | REFERENCE COORDINATE Z | MEASURED COORDINATE X | MEASURED COORDINATE Y | MEASURED COORDINATE Z | DEVIATION X | DEVIATION Y | DEVIATION Z |
|---|---|---|---|---|---|---|---|---|---|
| C001 | −1400 | 1300 | 1500 | −1404 | 1301 | 1495 | −4 | 1 | −5 |
| C002 | −700 | 1300 | 1500 | −696 | 1300 | 1501 | 4 | 0 | 1 |
| C003 | 0 | 1300 | 1500 | −3 | 1299 | 1503 | −3 | −1 | 3 |
| C004 | 700 | 1300 | 1500 | 702 | 1300 | 1500 | 2 | 0 | 0 |
| C005 | 1400 | 1300 | 1500 | 1405 | 1300 | 1496 | 5 | 0 | −4 |

| DISTANCE OF REFERENCE COORDINATE Z FROM DESIGN-BASED UPPER SURFACE HEIGHT OF FLOOR BOARD | RADIUS OF MEASURING PROBE |
|---|---|
| 1425 | 3.0 |
| 1425 | 3.0 |
| 1425 | 3.0 |
| 1425 | 3.0 |
| 1425 | 3.0 |

# FIG.34

■ SEARCH TARGET VEHICLE

CAR TYPE | ABC | FORMATION | 8 | CAR NUMBER | [ ]

[ SEARCH ]

■ SELECT TARGET VEHICLE

☐ CAR TYPE ABC, 8-CAR FORMATION, CAR NUMBER 1
☑ CAR TYPE ABC, 8-CAR FORMATION, CAR NUMBER 2
☐ CAR TYPE ABC, 8-CAR FORMATION, CAR NUMBER 3
☐ CAR TYPE ABC, 8-CAR FORMATION, CAR NUMBER 4
☐ CAR TYPE ABC, 8-CAR FORMATION, CAR NUMBER 5

■ SELECT IDEAL UPPER SURFACE OF FLOOR BOARD

☐ WITHOUT CONSIDERING CAMBER
☐ CONSIDER CAMBER SYSTEM
☑ USE CAMBER REFERENCE MEASUREMENT RESULT — 3001

■ EXECUTE COMPUTATION PROCESSING OF ADJUSTMENT MEMBER INFORMATION

[ EXECUTE ]

## FIG.35

## FIG.36

102

101

311

```
MEASUREMENT RESULT
INFORMATION
```

321

```
FLOOR SUPPORT
MEASUREMENT TABLE
```

```
SURFACE MATCHING REFERENCE
MEASUREMENT TABLE
```

323

```
VEHICLE DESIGN INFORMATION
```

312

```
FLOOR SUPPORT TABLE
```

313

```
AREA TABLE
```

314

```
ADJUSTMENT MEMBER
CLASSIFICATION TABLE
```

```
CAMBER SYSTEM
```

103

```
ADJUSTMENT MEMBER
INFORMATION
```

331

```
ADJUSTMENT MEMBER
TABLE
```

FIG.37

SURFACE MATCHING
REFERENCE MEASUREMENT POINT

CAMBER SYSTEM

SYSTEM
CORRECTION

SURFACE MATCHING
REFERENCE MEASUREMENT POINT

CAMBER SYSTEM

CAMBER SYSTEM
AFTER CORRECTION

FIG.38

```
                102                              101
                                                                    511
   ┌──────────────────────┐        521  ┌──────────────────────┐
   │  MEASUREMENT RESULT   │            │ VEHICLE DESIGN INFORMATION │    512
   │      INFORMATION      │            │                        │
   │ ┌────────────────────┐│            │ ┌────────────────────┐ │    313
   │ │FRONT SIDE WINDOW GLASS│          │ │ FRONT SIDE WINDOW GLASS│
   │ │SUPPORT MEASUREMENT │ │            │ │ SUPPORT TABLE      │ │
   │ │TABLE               │ │       522  │ └────────────────────┘ │
   │ └────────────────────┘│            │ ┌────────────────────┐ │
   │ ┌────────────────────┐│            │ │ FRONT SIDE WINDOW GLASS│
   │ │FRONT SIDE WINDOW GLASS│          │ │ TABLE              │ │
   │ │MEASUREMENT TABLE   │ │            │ └────────────────────┘ │
   │ └────────────────────┘│            │ ┌────────────────────┐ │
   │                       │            │ │ ADJUSTMENT MEMBER  │ │
   └──────────────────────┘            │ │ CLASSIFICATION TABLE│ │
                                        │ └────────────────────┘ │
                                        └──────────────────────┘

                103
   ┌──────────────────────┐
   │   ADJUSTMENT MEMBER   │       331
   │      INFORMATION      │
   │ ┌────────────────────┐│
   │ │ ADJUSTMENT MEMBER  │ │
   │ │ TABLE              │ │
   │ └────────────────────┘│
   │                       │
   └──────────────────────┘
```

FIG.39

FIG.40

FIG.41

CROSS-SECTION AA          CROSS-SECTION BB

FIG.42

## FIG.43

```
                    ┌──────────────┐
                    │    START     │
                    └──────┬───────┘
                           │
                           ▼
┌──────────────────────────────────────────┐
│  RECEIVE INPUT OF VEHICLE DESIGN INFORMATION 101 │  ⟋ S501
└──────────────────────────────────────────┘
                           │
                           ▼
┌──────────────────────────────────────────┐
│  RECEIVE INPUT OF MEASUREMENT RESULT INFORMATION 102 │  ⟋ S502
└──────────────────────────────────────────┘
                           │
                           ▼
┌──────────────────────────────────────────┐
│  EXECUTE VIRTUAL ASSEMBLY OF BODY STRUCTURE │  ⟋ S503
│  AND FITTING                               │
└──────────────────────────────────────────┘
                           │
                           ▼
┌──────────────────────────────────────────┐
│  COMPUTE ADJUSTMENT AMOUNT FROM DIFFERENCE │  ⟋ S504
│  BETWEEN BODY STRUCTURE AND FITTING AFTER  │
│  VIRTUAL ASSEMBLY                          │
└──────────────────────────────────────────┘
                           │
                           ▼
```

S505

RESTRICTION CONDITIONS ARE SATISFIED?

NO

YES

S507

S506

| OUTPUT ADJUSTMENT MEMBER INFORMATION | OUTPUT ADJUSTMENT NOT-POSSIBLE NOTICE |

```
                    ┌──────────────┐
                    │     END      │
                    └──────────────┘
```

# FIG.44

ADJUSTMENT MEMBER ARRANGEMENT INSTRUCTION

- TARGET     : CAR TYPE ABC, 8-CAR FORMATION, CAR NUMBER 1
- INSTALLATION  : 2016/##/##
  DATE
- ADJUSTMENT MEMBER ARRANGEMENT

GU01 GU02 GU03

GL01 — GR01

GL02 — GR02

GL03 — GR03

GB01 GB02 GB03

- LIST OF ADJUSTMENT MEMBERS

| ADJUSTMENT MEMBER ID | ADJUSTMENT MEMBER LENGTH [mm] | ADJUSTMENT MEMBER WIDTH [mm] | ADJUSTMENT MEMBER THICKNESS [mm] | MATERIAL | PACKING NUMBER |
|---|---|---|---|---|---|
| GU01 | 100 | 40 | 2 | VINYL CHLORIDE | 8-1-G1 |
| GU02 | 100 | 40 | 4 | VINYL CHLORIDE | 8-1-G1 |
| GU03 | 100 | 40 | 3 | VINYL CHLORIDE | 8-1-G1 |
| GR01 | 120 | 30 | 3 | VINYL CHLORIDE | 8-1-G2 |
| GR02 | 120 | 30 | 2 | VINYL CHLORIDE | 8-1-G2 |

FIG.45

MEASUREMENT RESULT INFORMATION — 102

- DRIVER'S CAB SUPPORT MEASUREMENT TABLE — 621
- DRIVER'S CAB CIRCUMFERENCE MEASUREMENT TABLE — 622
- DRIVER'S CAB MEASUREMENT TABLE — 623

VEHICLE DESIGN INFORMATION — 101

- DRIVER'S CAB SUPPORT TABLE — 611
- DRIVER'S CAB CIRCUMFERENCE TABLE — 612
- DRIVER'S CAB TABLE — 613
- ADJUSTMENT MEMBER CLASSIFICATION TABLE — 313

ADJUSTMENT MEMBER INFORMATION — 103

- ADJUSTMENT MEMBER TABLE — 331

FIG.46

FRONT-SIDE
WINDOW

654

652

651

653

656

CROSS-SECTION C

FIG.47

# FIG.48

START

RECEIVE INPUT OF VEHICLE DESIGN INFORMATION 101 — S601

RECEIVE INPUT OF MEASUREMENT RESULT INFORMATION 102 — S602

EXECUTE HORIZONTAL ALIGNMENT WITH RESPECT TO THE MEASUREMENT RESULT INFORMATION OF FITTINGS — S603

EXECUTE VERTICAL POSITION ARRANGEMENT OF MEASUREMENT RESULT INFORMATION OF FITTING — S604

COMPUTE ADJUSTMENT AMOUNT BASED ON DIFFERENCE BETWEEN BODY STRUCTURE AND FITTING AFTER VIRTUAL ASSEMBLY — S605

UPPER AND LOWER LIMIT VALUES OF ADJUSTMENT MEMBER THICKNESS ARE SATISFIED? — S606
NO
YES

INTERFERENCE BETWEEN UPPER SURFACE OF DRIVER'S CAB AND BODY STRUCTURE PILLER DOES NOT OCCUR — S607
YES
NO

INTERFERENCE BETWEEN LOWER SURFACE OF DRIVER'S CAB AND LOWER EQUIPMENT DOES NOT OCCUR — S608
YES
NO

SMALLER THAN CALCULATED SPECIFIED NUMBER OF TIMES? — S609
YES
NO

OUTPUT ADJUSTMENT MEMBER INFORMATION — S611

OUTPUT ADJUSTMENT NOT-POSSIBLE NOTICE — S610

END

## FIG.49

ADJUSTMENT MEMBER ARRANGEMENT INSTRUCTION

- TARGET : CAR TYPE ABC, 8-CAR FORMATION, CAR NUMBER 1
- INSTALLATION DATE : 2016/##/##

- ADJUSTMENT MEMBER ARRANGEMENT

(LEADING END SIDE)

CFL01 — CFR01

CBL01 — CBR01 / CBR02

(CABIN SIDE)

- LIST OF ADJUSTMENT MEMBERS

| ADJUSTMENT MEMBER ID | ADJUSTMENT MEMBER LENGTH [mm] | ADJUSTMENT MEMBER WIDTH [mm] | ADJUSTMENT MEMBER THICKNESS [mm] | MATERIAL | PACKING NUMBER |
|---|---|---|---|---|---|
| CFL01 | 200 | 300 | 6 | VINYL CHLORIDE | 8-1-C1 |
| CBL01 | 200 | 300 | 4 | VINYL CHLORIDE | 8-1-C2 |
| CFR01 | 200 | 300 | 5 | VINYL CHLORIDE | 8-1-C3 |
| CBR01 | 70 | 300 | 3 | VINYL CHLORIDE | 8-1-C4 |
| CBR02 | 130 | 300 | 4 | VINYL CHLORIDE | 8-1-C4 |

FIG.50

| ADJUSTMENT MEMBER CLASSIFICATION ID | MEMBER NAME | MATERIAL | THICKNESS [mm] | ADJUSTMENT METHOD |
|---|---|---|---|---|
| AT01 | LINER | VINYL CHLORIDE | 5,3,1,0.5 | LAMINATION |
| AT02 | LINER | SUS304 | 3,2,1,0.5 | LAMINATION |
| AT03 | RUBBER SHEET | STYRENE-BUTADIENE | 4,3,2,1 | LAMINATION |
| AT04 | RUBBER SHEET | CHLOROPRENE | 5,1 | LAMINATION |

# FIG.51

```
                    ┌─────────────┐
                    │    START    │
                    └─────────────┘
                           │
                           ▼
┌──────────────────────────────────────────────┐
│ RECEIVE INPUT OF VEHICLE DESIGN INFORMATION 101│ ⟋ S201
│   AND ADJUSTMENT MEMBER INFORMATION 103        │
└──────────────────────────────────────────────┘
                           │
                           ▼
┌──────────────────────────────────────────────┐
│    RECEIVE INPUT OF INSTRUCTION INFORMATION    │ ⟋ S202
│           FOR ADJUSTMENT MEMBER                │
└──────────────────────────────────────────────┘
                           │
                           ▼
┌──────────────────────────────────────────────┐
│       RECEIVE SELECTION ON WHETHER TO          │ ⟋ S211
│   INTEGRATE ADJACENT ADJUSTMENT MEMBERS        │
└──────────────────────────────────────────────┘
                           │
                           ▼
┌──────────────────────────────────────────────┐
│          COMPUTE ALL COMBINATIONS OF           │ ⟋ S212
│      ADJUSTMENT MEMBER THICKNESSES             │
└──────────────────────────────────────────────┘
                           │
                           ▼
┌──────────────────────────────────────────────┐
│        RECEIVE INPUT OF COMBINATION            │ ⟋ S213
│           EVALUATION SYSTEM                    │
└──────────────────────────────────────────────┘
                           │
                           ▼
┌──────────────────────────────────────────────┐
│           COMPUTE COMBINATION OF               │ ⟋ S214
│      ADJUSTMENT MEMBER THICKNESSES             │
└──────────────────────────────────────────────┘
                           │
                           ▼
┌──────────────────────────────────────────────┐
│            COMPUTE PACKING NUMBER              │ ⟋ S203
└──────────────────────────────────────────────┘
                           │
                           ▼
┌──────────────────────────────────────────────┐
│  OUTPUT ADJUSTMENT MEMBER FABRICATION INSTRUCTION│ ⟋ S204
└──────────────────────────────────────────────┘
                           │
                           ▼
┌──────────────────────────────────────────────┐
│ OUTPUT ADJUSTMENT MEMBER ARRANGEMENT INSTRUCTION│ ⟋ S205
└──────────────────────────────────────────────┘
                           │
                           ▼
                    ┌─────────────┐
                    │     END     │
                    └─────────────┘
```

# FIG.52

COMPUTED ADJUSTMENT
MEMBER THICKNESS

N=4
N=3
N=2
N=1

ADJUSTMENT
MEMBER
THICKNESS
PITCH

P=1mm

0     400     1000

INTEGRATED    NOT INTEGRATED

| 1+1+1<br>2+1<br>3 | × | 1mm | = 3 TYPES |

| 1+1+1<br>2+1<br>3 | × | 1+1+1+1<br>2+1+1<br>2+2<br>3+1<br>4 | = 15 TYPES |

PRIORITIZE
MINIMIZED
NUMBER OF
MEMBERS

PRIORITIZE
MINIMIZED
NUMBER OF
MEMBERS

| 3mm THICKNESS<br>×<br>1000 mm LENGTH | 1 mm THICKNESS<br>×<br>600 mm LENGTH |

| 3 mm THICKNESS<br>×<br>400 mm LENGTH | 4 mm THICKNESS<br>×<br>600 mm LENGTH |

**REFERENCES CITED IN THE DESCRIPTION**

**Patent documents cited in the description**

- JP 5228145 B